# FASCICULE DE BREVET EUROPEEN

(11) **EP 3 619 444 B1**
(45) Date de publication et mention de la délivrance du brevet: **21.07.2021**
(21) Numéro de dépôt: 18718878.4
(22) Date de dépôt: 26.03.2018
(51) Int. Cl.: F16F 13/14, F16F 13/26

(54) **DISPOSITIF HYDROÉLASTIQUE COMPORTANT UN SYSTÈME DE BLOCAGE**
HYDROELASTISCHE VORRICHTUNG, EIN VERRIEGELUNGSSYSTEM UMFASSEND
HYDROELASTIC DEVICE COMPRISING A LOCKING SYSTEM

(30) Priorité: 04.05.2017 FR 1753953
(43) Date de publication de la demande: 11.03.2020
(73) Titulaire: ANVIS HOLDING, 88000 Épinal (FR)
(72) Inventeur: LE QUERE DUMONT, Patrice, 58130 Guerigny (FR); FORT, Patrice, 44470 Thouare sur Loire (FR)
(74) Mandataire: Ernest Gutmann - Yves Plasseraud S.A.S.
(86) Numéro de dépôt international: PCT/FR2018/050725
(87) Numéro de publication internationale: WO 2018/202967

(56) Documents cités:
- WO-A1-95/30843
- FR-A1- 2 923 881

## Description

L'invention concerne le domaine des dispositifs hydroélastiques et se rapporte à des moyens palliatifs de perte de remplissage de liquide d'amortissement. Un tel dispositif hydroélastique, destiné à être monté sur une machine, fixé à deux éléments, pour les assembler et assurer une transmission d'efforts de l'un à l'autre et amortir ou filtrer les vibrations entre eux, est par exemple mis en œuvre dans un véhicule (train, automobile...) pour la liaison au sol. L'expression « dispositif hydroélastique » doit être considérée comme analogue à « support antivibratoire hydraulique », « manchon hydraulique anti-vibration », « hydromount » ou, en langue anglaise, « bushing » ou « fluid-filled elastic mount ».

Un dispositif hydroélastique du genre auquel peut s'appliquer l'invention comprend, de façon connue des éléments solides de transmission de force incluant une armature interne et une armature externe espacées, délimitant un entre-deux, ainsi qu'un corps d'amortissement, relativement rigide mais déformable élastiquement, disposé dans l'entre-deux et associé aux deux armatures, et un espace d'amortissement incluant au moins une chambre d'amortissement, associé au corps d'amortissement. Normalement, l'espace d'amortissement est rempli d'un liquide d'amortissement sous pression ce qui correspond à un état dit « état de remplissage ». Ce liquide d'amortissement est apte et destiné à être déplacé dans l'espace d'amortissement consécutivement à ce qui est ici dénommé par ellipse « sollicitation des armatures » et qui est l'exercice sur l'une des armatures par rapport à l'autre d'une force dans une direction de sollicitation, dénommée par ellipse « direction de sollicitation du dispositif », de sorte à amortir ou filtrer les vibrations. Selon les réalisations, l'espace d'amortissement comprend une, deux ou plus de chambres d'amortissement. Un canal d'amortissement, de liaison, allongé et étroit relie typiquement plusieurs chambres d'amortissement.

Dans le cas où le dispositif hydroélastique est une articulation (voir FR 2 817 007), l'armature externe entoure latéralement et concentriquement l'armature interne et l'entre-deux est annulaire. L'articulation hydroélastique présente un axe principal et s'inscrit entre deux faces terminales transversales, l'armature interne émergeant de l'une au moins d'entre elles afin de pouvoir être assemblée à l'un des deux éléments, tandis que l'armature externe peut être associée à l'autre des deux éléments. Dans un type de réalisation, l'articulation hydroélastique comprend une armature interne rigide de forme générale cylindrique ; une armature externe rigide de forme générale tubulaire cylindrique de diamètre intérieur plus grand que le diamètre extérieur de l'armature interne, entourée latéralement et concentriquement par l'armature externe ; et un entre-deux cylindrique annulaire s'étendant radialement et axialement entre les deux armatures espacées radialement ; un corps d'amortissement, comprenant une masse conformée en élastomère, caoutchouc ou analogue, disposé dans l'entre-deux, s'étendant radialement et axialement, et associé de façon fixe et rigide vers l'intérieur à l'armature interne et vers l'extérieur à l'armature externe ; deux chambres d'amortissement, ménagées grâce à la conformation du corps d'amortissement, s'étendant radialement et axialement, diamétralement opposées, interposées entre le corps d'amortissement et l'armature externe ; un canal d'amortissement, de liaison, allongé et étroit reliant de façon communicante les deux chambres d'amortissement ; et un liquide d'amortissement à relativement faible viscosité, remplissant sous pression l'espace d'amortissement formé par les deux chambres d'amortissement et le canal d'amortissement.

Par « forme cylindrique », il faut comprendre, une forme obtenue par le déplacement d'une génératrice qui, en tout ou partie, est de forme générale rectiligne ou pseudo-rectiligne, le long d'une courbe directrice fermée de forme générale circulaire ou pseudo-circulaire ou arrondie ou polygonale.

Avec une telle articulation hydroélastique, une force radiale relative sur une armature par rapport à l'autre a pour effet la compression de l'une des chambres d'amortissement et la dilatation de l'autre, du fluide d'amortissement étant chassé de la chambre d'amortissement comprimée vers celle dilatée en circulant à travers le canal. Cette sollicitation des armatures intervient à une certaine fréquence en correspondance avec la fréquence de résonnance de la masse de liquide qui traverse le canal d'amortissement, ce qui induit la section transversale et la longueur du canal. Une telle articulation hydroélastique se trouve dans un état de raideur faible à basse fréquence et dans un état de raideur haute au-dessus d'une fréquence donnée. C'est ainsi que les vibrations sont amorties ou filtrées.

On connaît nombre de configurations particulières d'une telle articulation hydroélastique : FR 2 595 426 (deux canaux de liaison), FR 2 618 508 (deux chambres et deux conduits), FR 2 830 911 (deux corps d'amortissement, une armature intermédiaire), FR 2 853 380 (quatre chambres), FR 2 926 864 (deux articulations couplées), EP 0 304 349 (second canal de liaison obturable), EP 1 348 885 (armature intermédiaire en C), EP 1 378 682, US 3 698 703 et GB 2 316 731. JP 04 102741 prévoit un corps de blocage apte à venir en butée contre l'armature interne en cas de sollicitation radiale pour limiter le déplacement. WO 2008/071885 prévoit une armature intermédiaire cylindrique incluse dans le corps d'amortissement, pourvue de deux corps de blocage situés dans deux cavités formant chambre d'amortissement, aptes à transmettre une force d'appui de l'armature interne sur l'armature externe en cas de déplacement radial relatif d'une amplitude supérieure à une limite préfixée. US 5 024 425 et FR 2 830 911 décrivent un corps d'amortissement comportant des tampons d'arrêt. US 4 899 997 décrit une articulation hydroélastique à deux chambres qui comporte une colonne pré-chargée, en matériau déformable, pouvant être aplatie pour compenser les déviations statiques radiales. Quelle que soit la configuration, il faut que l'espace d'amortissement soit scellé et étanche de sorte qu'il n'y ait pas de perte de liquide, ce qui serait de nature à compromettre de façon plus ou moins grave, voire même dangereuse, le bon fonctionnement. Un tel scellage et une telle étanchéité sont évoqués dans FR 2 730 537 (collerette de fermeture étanche), EP 0 234 966 (deux pièces assemblées), JP S 561 43 830 (joint d'étanchéité), EP 0 296 062, US 3 642 268 (fermeture automatique du trou d'injection du liquide d'amortissement), EP 0 894 998. Mais, aucun de ces documents ne propose une solution palliant la perte de liquide d'amortissement, ce qui correspond à un état dit « état de perte de remplissage », alors qu'il a pour effet que le dispositif hydroélastique se trouve dans un état de raideur faible ce qui ne garantit pas un comportement stable. L'expression « perte de remplissage » doit être comprise comme signifiant la perte de liquide d'amortissement de l'espace d'amortissement qui n'est plus rempli de ce liquide. L'état de la technique comprend également DE 196 51 138, US 4 875 664, JP S60 121339, US 2006/071379, EP 2 672 137, US 4 741 521, US 5 123 634, US 6 168 144, WO 96/14520 et FR 2 923 881, mais aucun ne propose une solution palliant la perte de liquide d'amortissement. C'est également le cas de WO 95/30843 qui fait état du problème de la perte du liquide d'amortissement, mais se borne à constater que dans ce cas, le corps d'amortissement continue à remplir sa fonction.

L'invention a donc pour but, pour un dispositif hydroélastique, notamment une articulation hydroélastique, de pallier, dans une certaine mesure, une défaillance de scellage et d'étanchéité et donc une perte de liquide d'amortissement et ses conséquences. Et l'invention prévoit d'intégrer au dispositif, en plus, des moyens palliatifs de la perte de remplissage, qui sont des moyens à pièce de blocage et à sollicitation commandée par l'état du dispositif au regard du remplissage. Ces moyens sont palliatifs car ils atténuent ou suppriment les conséquences en termes d'amortissement qui découleraient, en leur absence, d'une perte de liquide d'amortissement. Ces moyens sont spécifiques et propres, car ils ont comme caractéristique originale et exclusive de pallier la perte de remplissage.

Selon un premier aspect, l'invention a pour objet un dispositif hydroélastique du genre précédemment exposé, comprenant des éléments solides de transmission de force incluant une armature interne et une armature externe délimitant un entre-deux, ainsi qu'un corps d'amortissement, relativement rigide mais déformable élastiquement, disposé dans l'entre-deux et associé aux deux armatures, et un espace d'amortissement incluant au moins une chambre d'amortissement et associé au corps d'amortissement. Le dispositif est normalement dans un état de remplissage où l'espace d'amortissement est rempli d'un liquide d'amortissement sous pression apte et destiné à être déplacé dans l'espace d'amortissement consécutivement à l'exercice sur l'une des armatures par rapport à l'autre d'une force dans une direction de sollicitation du dispositif, de sorte à amortir ou filtrer les vibrations. Le dispositif peut accidentellement être dans un état de perte de remplissage où l'espace d'amortissement n'est plus rempli du liquide d'amortissement sous pression. Le dispositif comporte en plus des moyens intégrés, spécifiques et propres, palliatifs de la perte de remplissage, inactifs à l'état de remplissage et rendus actifs à l'état de perte de remplissage où ils amènent le dispositif à un état de raideur d'un niveau élevé propre à ce qu'il présente un comportement stable, bien que l'espace d'amortissement ne soit pas rempli du liquide d'amortissement sous pression, ces moyens palliatifs comprenant un système de blocage incluant une pièce de blocage, intégralement rigide, et une pièce de sollicitation, déformable, commandée par l'état du dispositif eu égard au remplissage.

Les moyens intégrés palliatifs comprennent un système de blocage autoportant et porté par le dispositif hydroélastique, intégrant, associant et unissant une pièce de sollicitation et une pièce de blocage, avec la pièce de sollicitation portée par et assujettie à un élément solide de transmission de force du dispositif hydroélastique et la pièce de blocage portée par et assujettie à la pièce de sollicitation, localisé dans une chambre d'amortissement, apte et destiné à être inactif à l'état de remplissage et rendu actif à l'état de perte de remplissage, tel que la pièce de blocage, intégralement rigide, et apte et destinée, d'une part, à pouvoir être déplacée par la pièce de sollicitation dans une direction de sollicitation de pièce de blocage, d'autre part, à occuper deux positions extrêmes, une position inactive dans l'état de remplissage, dans laquelle la pièce de blocage assure une discontinuité de transmission de force dans la direction de sollicitation du dispositif hydroélastique, n'étant pas en blocage dans la direction de sollicitation du dispositif hydroélastique et une position active dans l'état de perte de remplissage, dans laquelle la pièce de blocage, étant en blocage dans la direction de sollicitation du dispositif hydroélastique, assure une continuité de transmission de force dans la direction de sollicitation du dispositif hydroélastique et ajoute une raideur supplémentaire dans cette direction, et tel que la pièce de sollicitation est déformable entre un état comprimé et un état déployé et commandée par l'état du dispositif hydroélastique, de sorte qu'elle se trouve à l'état comprimé lorsque le dispositif hydroélastique est à l'état de remplissage, à l'état déployé lorsque le dispositif hydroélastique est à l'état de perte de remplissage, qu'elle est déformée de l'état comprimé à l'état déployé lors du passage de l'état de remplissage à l'état de perte de remplissage, et qu'elle est apte et destinée à solliciter la pièce de blocage pour la déplacer dans la direction de sollicitation de pièce de blocage, d'une position inactive à la position active lors du passage de l'état comprimé à l'état déployé et la maintenir dans la position active tant que la pièce de sollicitation est à l'état déployé.

La pièce de sollicitation peut être commandée par l'état du dispositif de sorte à être déformée de l'état déployé à l'état comprimé lors du passage de l'état de perte de remplissage à l'état de remplissage, en étant apte et destinée à solliciter la pièce de blocage pour la déplacer de sa position active à une position inactive lors du passage de l'état déployé à l'état comprimé.

La pièce de sollicitation peut comprendre une partie de support et d'assujettissement à un élément solide de transmission de force du dispositif hydroélastique, une partie de support et d'assujettissement de la pièce de blocage, et, reliant ces deux parties de support et d'assujettissement, au moins une partie allongée autoportante et déformable et commandée par l'état du dispositif hydroélastique de sorte à être déformée entre ses deux états, la partie de support et d'assujettissement de la pièce de blocage étant déplacée dans la direction de sollicitation de pièce de blocage.

La partie déformable de la pièce de sollicitation, réalisée en un matériau déformable, peut comporter un ou plusieurs espaces creux internes, sans communication avec l'extérieur, de la pièce de sollicitation, dans lequel ou lesquels règne une pression qui est plus petite que la pression du liquide d'amortissement du dispositif hydroélastique se trouvant dans l'état de remplissage et plus grande que ou égale à la pression atmosphérique. La partie déformable de la pièce de sollicitation est soit comprimée lorsque dispositif est à l'état de remplissage, la pression régnant dans le ou les espaces creux internes étant plus petite que la pression du liquide d'amortissement du dispositif, de sorte que le liquide d'amortissement comprime la partie allongée déformable, soit déployée lorsque le dispositif est à l'état de perte de remplissage, la pression régnant dans le ou les espaces creux internes étant plus grande que ou égale à la pression atmosphérique régnant dans la chambre d'amortissement du fait de la perte de liquide d'amortissement. La partie déformable est conformée de sorte que lors du passage de l'état de remplissage à l'état de perte de remplissage, la partie de support et d'assujettissement de la pièce de blocage soit déplacée dans la direction de sollicitation de pièce de blocage. La pièce de sollicitation peut comporter une partie déformable sous la forme de deux bras inclinés l'un sur l'autre, d'une part, convergeant vers la partie de support et d'assujettissement à un élément solide de transmission de force du dispositif prévue sur la pièce de sollicitation, d'autre part, divergeant vers la partie de support et d'assujettissement de la pièce de blocage, une double partie de support et d'assujettissement de la pièce de blocage étant ainsi prévue sur la pièce de sollicitation.

La partie de support et d'assujettissement à un élément solide de transmission de force du dispositif peut être portée par un appendice support saillant de la face du corps d'amortissement.

La face latérale de la pièce de blocage peut présenter au moins une zone de dégagement qui, dans la position inactive de la pièce de blocage, est située dans la direction de sollicitation du dispositif en étant écartée et sans contact d'au moins une zone de dégagement en regard correspondante appartenant ou associée à la face latérale intérieure de chambre d'amortissement, de sorte à assurer la discontinuité de transmission de force dans la direction de sollicitation du dispositif. La pièce de blocage peut présenter soit une unique zone de dégagement soit deux zones de dégagement opposées, avec, respectivement, soit une unique zone de dégagement en regard soit deux zones de dégagement en regard opposées. Une zone de dégagement en regard peut être une zone de la face latérale d'une armature ou du corps d'amortissement tournée vers la chambre d'amortissement ou une zone d'une butée d'engagement ménagée dans la chambre d'amortissement.

La face latérale de la pièce de blocage peut présenter au moins une zone d'engagement qui, dans la position active de la pièce de blocage, est située dans la direction de sollicitation du dispositif en étant au contact avec transmission de force d'au moins une zone de d'engagement contiguë appartenant ou associée à la face latérale intérieure de chambre d'amortissement, de sorte à assurer la continuité de transmission de force dans la direction de sollicitation du dispositif. La pièce de blocage peut présenter soit une unique zone d'engagement soit deux zones d'engagement opposées, avec, respectivement, soit une unique zone de d'engagement contiguë soit deux zones d'engagement contiguës.

Une zone d'engagement contiguë appartenant ou associée à la face latérale intérieure de chambre d'amortissement peut être une zone de la face latérale d'une armature ou du corps d'amortissement tournée vers la chambre d'amortissement ou une zone d'une butée d'engagement ménagée dans la chambre d'amortissement.

La face latérale de la pièce de blocage peut présenter une zone de dégagement et une zone d'engagement qui sont attenantes ou voisines, ou présenter une zone de dégagement et une zone d'engagement attenantes ou voisines qui s'étendent sur une longueur en correspondance avec la course de déplacement de la pièce de blocage entre ses positions extrêmes inactive et active.

La face latérale de la pièce de blocage peut présenter une zone de maintien/sollicitation qui est associée solidement à une zone de maintien/sollicitation correspondante appartenant à la pièce de sollicitation, de sorte à assurer d'une part le maintien de la pièce de blocage dans la position active ou dans la position inactive selon que la pièce de sollicitation est à l'état comprimé ou à l'état déployé, d'autre part, le déplacement de la pièce de blocage, dans la direction de sollicitation de pièce de blocage, d'une position inactive à la position active lors du passage de la pièce de sollicitation de l'état comprimé à l'état déployé.

La face latérale de la pièce de blocage peut présenter dans la zone de maintien/sollicitation une partie de support et d'assujettissement complémentaire de la partie de support et d'assujettissement de la pièce de blocage prévue sur la pièce de sollicitation dans la zone de maintien/sollicitation correspondante. En particulier, la face latérale peut présenter une double partie de support et d'assujettissement complémentaire d'une double partie de support et d'assujettissement de la pièce de blocage, ces doubles parties de support et d'assujettissement étant écartées et situées le long la direction de sollicitation du dispositif.

La direction de sollicitation de pièce de blocage est ou comprend une composante transversale, notamment perpendiculaire ou proche de la perpendiculaire, par rapport à la direction de sollicitation du dispositif.

La pièce de blocage peut présenter une face latérale dont le contour est de forme polygonale ou pseudo-polygonale ou s'inscrivant dans une enveloppe de forme polygonale ou pseudo-polygonale. Elle peut comporter une partie conformée avec un décrochement en forme générale de double L inversé, avec d'un côté une zone de dégagement et de l'autre côté une zone d'engagement.

La pièce de blocage peut être creuse et légère.

Il peut être prévu une, deux ou un plus grand nombre de chambres d'amortissement, ou une pluralité de chambres d'amortissement une pièce de blocage étant prévue dans la totalité ou dans une partie seulement des chambres d'amortissement. Le dispositif peut comprendre une pluralité de chambres d'amortissement dont au moins une paire de chambres d'amortissement disposées dans la direction de sollicitation du dispositif, une pièce de blocage étant prévue dans chacune des chambres d'amortissement d'au moins une paire de chambres d'amortissement.

Le dispositif précédemment décrit peut être une articulation hydroélastique présentant un axe principal et s'inscrivant entre deux faces terminales transversales, l'armature interne émergeant de l'une au moins des faces terminales pour son assemblage, dans lequel l'armature interne est de forme générale cylindrique, l'armature externe est de forme générale tubulaire cylindrique, dont le diamètre intérieur est plus grand que le diamètre extérieur de l'armature interne, de sorte que l'armature externe entoure latéralement et concentriquement l'armature interne, l'entre-deux est de forme générale cylindrique annulaire s'étendant radialement et axialement entre les deux armatures espacées radialement l'une de l'autre, le corps d'amortissement s'étend radialement et axialement et est associé de façon fixe et rigide vers l'intérieur à l'armature interne et vers l'extérieur à l'armature externe, deux chambres d'amortissement sont ménagées grâce à la conformation du corps d'amortissement, en s'étendant radialement et axialement, en étant diamétralement opposées dans la direction de sollicitation du dispositif, et interposées entre le corps d'amortissement et l'armature externe, un canal d'amortissement, de liaison, allongé et étroit, relie de façon communicante les deux chambres d'amortissement, à l'état de remplissage, le liquide d'amortissement hydraulique remplit sous pression l'espace d'amortissement formé par les deux chambres d'amortissement et le canal d'amortissement, et la direction de sollicitation du dispositif est radiale. L'armature interne et l'armature externe et une chambre d'amortissement peuvent être de forme générale cylindrique. Chaque chambre d'amortissement peut être limitée par une face latérale intérieure de chambre d'amortissement formée d'un côté par une partie de chambre d'amortissement de la face intérieure de l'armature externe et de l'autre côté par une face de chambre d'amortissement du corps d'amortissement.

Chaque pièce de blocage peut présenter une face latérale dont le contour est de forme pseudo-rectangulaire ou s'inscrivant dans une enveloppe de forme pseudo-rectangulaire, avec une première partie de face adjacente à une zone de la face de chambre d'amortissement du corps d'amortissement, une deuxième partie de face, opposée à la première partie de face, située vers la partie de chambre d'amortissement de la face intérieure de l'armature externe, et une troisième et une quatrième parties de face, opposées l'une à l'autre, reliant la première et la deuxième parties de face. La deuxième partie de face peut comporter une partie conformée avec un décrochement en forme générale de double L inversé. La zone de dégagement peut être située en position médiane sur la deuxième partie de face de la face latérale de la pièce de blocage. La face latérale peut présenter deux zones d'engagement, l'une située sur la première partie de face et l'autre située en position médiane sur la deuxième partie de face et la troisième partie de face latérale comporter la partie de support et d'assujettissement à la pièce de sollicitation. Le dispositif peut comprendre, pour chaque pièce de blocage, une zone de dégagement en regard appartenant à une butée d'engagement ménagée dans la chambre d'amortissement, et plus particulièrement deux zones d'engagement en regard qui, respectivement est formée par une partie de la face de chambre d'amortissement du corps d'amortissement et appartient à une butée d'engagement ménagée dans la chambre d'amortissement.

Le dispositif peut se trouver soit dans l'état de remplissage, la pièce de blocage se trouvant dans une position inactive, la pièce de sollicitation se trouvant dans l'état comprimé, soit dans l'état de perte remplissage, la pièce de blocage se trouvant dans une position active, la pièce de sollicitation se trouvant dans l'état déployé.

Selon un deuxième aspect, l'invention a pour objet des moyens, spécifiques et propres, palliatifs de la perte de remplissage d'un dispositif tel qu'il a été décrit précédemment, spécialement aptes et destinés à être intégrés, en plus, à un tel dispositif, ces moyens palliatifs comprenant un système de blocage incluant une pièce de blocage, intégralement rigide, et une pièce de sollicitation, déformable, commandée par l'état du dispositif eu égard au remplissage.

Selon un troisième aspect, l'invention a pour objet un procédé pour pallier la perte de remplissage d'un dispositif du genre précédemment décrit, par la mise en œuvre de moyens palliatifs de la perte de remplissage tel qu'il vient d'être décrit.
La figure 1 est un schéma en perspective d'un mode d'exécution théorique possible d'un dispositif hydroélastique illustrant le genre de celui auquel peut s'appliquer l'invention et la figure 2 est un schéma en perspective et en coupe par un plan axial médian du dispositif de la figure 1.
La figure 3 est une vue en perspective, partiellement arrachée, d'une articulation hydroélastique selon un mode d'exécution possible de l'invention, à laquelle sont intégrés des moyens palliatifs de la perte de remplissage - représentés sur la figure -.
La figure 4 est une vue en coupe transversale de l'articulation hydroélastique alors qu'il n'y a pas eu perte de liquide d'amortissement et la figure 5, une vue analogue de l'articulation hydroélastique alors qu'accidentellement il y a eu perte de liquide d'amortissement.

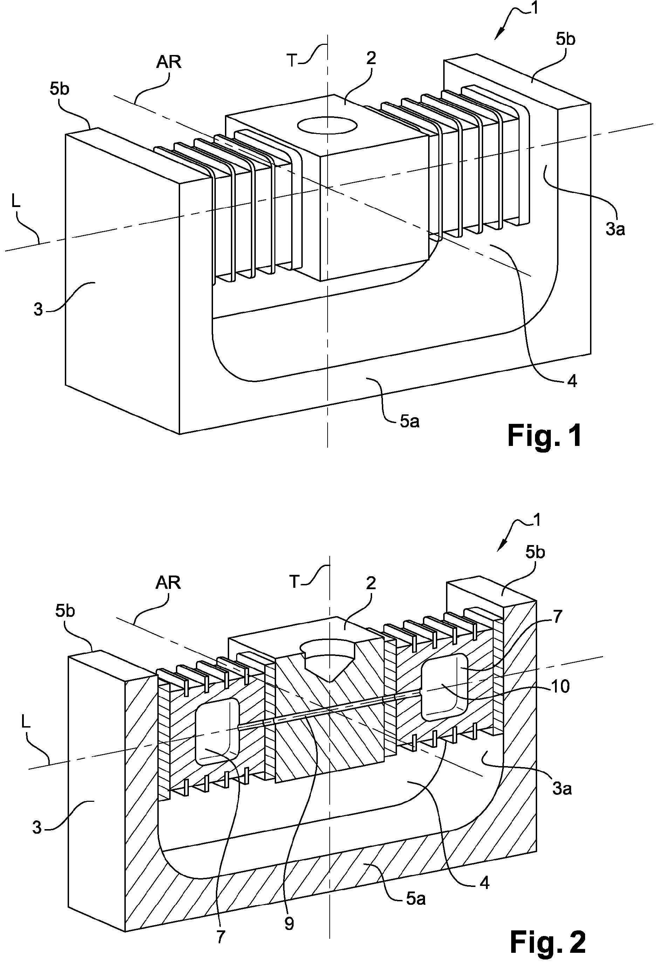

Un dispositif hydroélastique 1 illustrant le genre de celui auquel s'applique l'invention, est schématisé sur les figures 1 et 2, selon un mode d'exécution qui n'est pas exclusif d'autres. Il s'inscrit dans une enveloppe extérieure de forme générale parallélépipédique ou pseudo-parallélépipédique et comprend des éléments solides de transmission de force incluant une armature interne 2, rigide, et une armature externe 3, rigide, un entre-deux 4 entre les deux armatures 2 et 3 espacées l'une de l'autre. En référence au plan frontal du dispositif 1, l'armature interne 2 a en élévation une forme générale carrée ou rectangulaire et l'armature externe 3 a en élévation une forme générale de U avec une base 5a s'étendant dans une direction longitudinale L et deux ailes 5b s'étendant dans une direction longitudinale T, espacées, et entre lesquelles se trouve l'armature interne 1 qui est aussi espacée de la base 5a. Dans la direction longitudinale L, la dimension intérieure de l'armature externe 3 est plus grande que la dimension intérieure de l'armature interne 2, l'armature externe 3 entourant l'armature interne 2. L'entre-deux 4 a une forme générale de U. Le plan frontal est parallèle à la direction longitudinale L et à la direction longitudinale T et le dispositif 1 s'étend le long de la direction avant-arrière AR perpendiculaire au plan frontal. Le dispositif 1 comprend également deux corps d'amortissement 6, relativement rigides mais déformables élastiquement, comprenant une masse conformée, en élastomère, caoutchouc ou analogue, s'inscrivant chacun dans une enveloppe extérieure de forme générale parallélépipédique ou pseudo-parallélépipédique, disposés dans l'entre-deux 4 et s'étendant dans la direction longitudinale L, en étant associés, de façon fixe et rigide vers l'intérieur à l'armature interne 1 et vers l'extérieur aux deux ailes 5b de l'armature externe 2. Deux chambres d'amortissement 7, distinctes et séparées, sont ménagées dans les deux corps d'amortissement 6 conformés à cet effet, chacune limitée notamment par une face latérale intérieure 8. Les deux chambres d'amortissement 7 sont déformables à l'instar des deux corps d'amortissement 6. Elles s'étendent dans les directions longitudinales L et T et dans la direction AR. Elles sont symétriquement opposées par rapport à l'axe médian transversal du dispositif 1 et reliées de façon communicante par un canal d'amortissement 9, de liaison, allongé et étroit. Un liquide d'amortissement 10 à relativement faible viscosité, remplit sous pression l'espace d'amortissement 7+9 formé par les chambres d'amortissement 7 et le canal d'amortissement 9. Le liquide d'amortissement 10 est déplacé dans l'espace d'amortissement 7+9 consécutivement à l'exercice sur l'une des armatures 2, 3, par rapport à l'autre armature 3, 2, d'une force dans une direction F de sollicitation du dispositif 1, de sorte à amortir ou filtrer les vibrations. Le dispositif 1 est normalement dans l'état de remplissage dans lequel l'espace d'amortissement 7+9 est rempli du liquide d'amortissement 10. Mais, il peut accidentellement, par exemple suite à une fuite, passer à l'état de perte de remplissage où l'espace d'amortissement 7+9 n'est plus rempli de liquide d'amortissement.

Ci-après un exposé détaillé de modes d'exécution de l'invention et de différentes réalisations, assorti d'exemples et de référence aux dessins.

Les différents modes d'exécution d'un dispositif 1 peuvent intégrer des moyens dénommés conventionnellement « moyens palliatifs de la perte de remplissage 11 » ou par ellipse, « moyens palliatifs 11 ». Ces moyens palliatifs 11 sont à fonctionnement automatique et, en cas de perte de liquide d'amortissement dans l'espace d'amortissement 7+9, ils amènent le dispositif 1 à un état de raideur d'un niveau élevé propre à ce qu'il présente un comportement stable. Ces moyens palliatifs 11 sont à pièce de blocage et à sollicitation commandée par l'état du dispositif 1 au regard du remplissage. Ces moyens palliatifs 11 atténuent ou suppriment les conséquences en termes d'amortissement qui découleraient, en leur absence, d'une perte de liquide d'amortissement. Ils Ces moyens palliatifs 11 sont spécifiques et propres, car ils ont comme caractéristique originale et exclusive de pallier la perte de remplissage. Conséquemment, ces moyens 11 sont distincts tant du corps d'amortissement 6 que du liquide d'amortissement 10 emplissant l'espace d'amortissement.

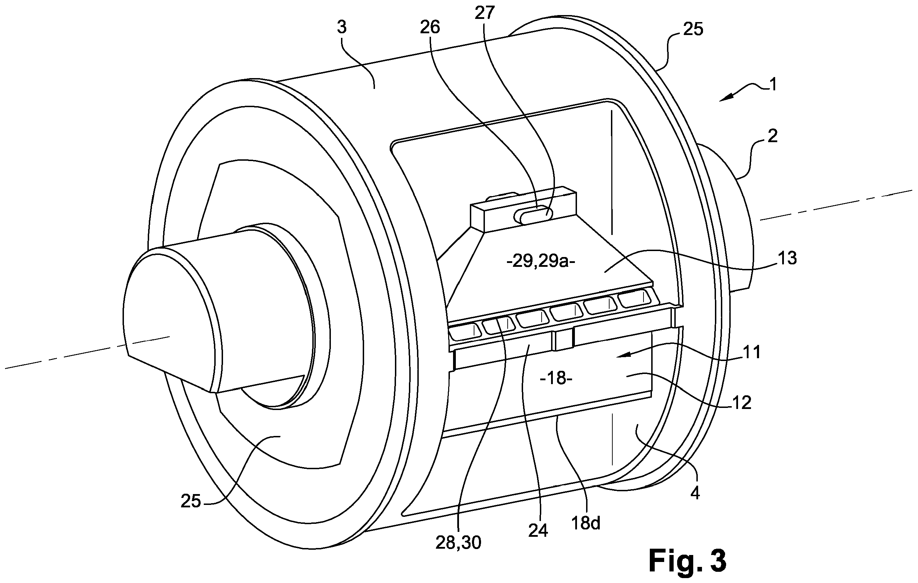

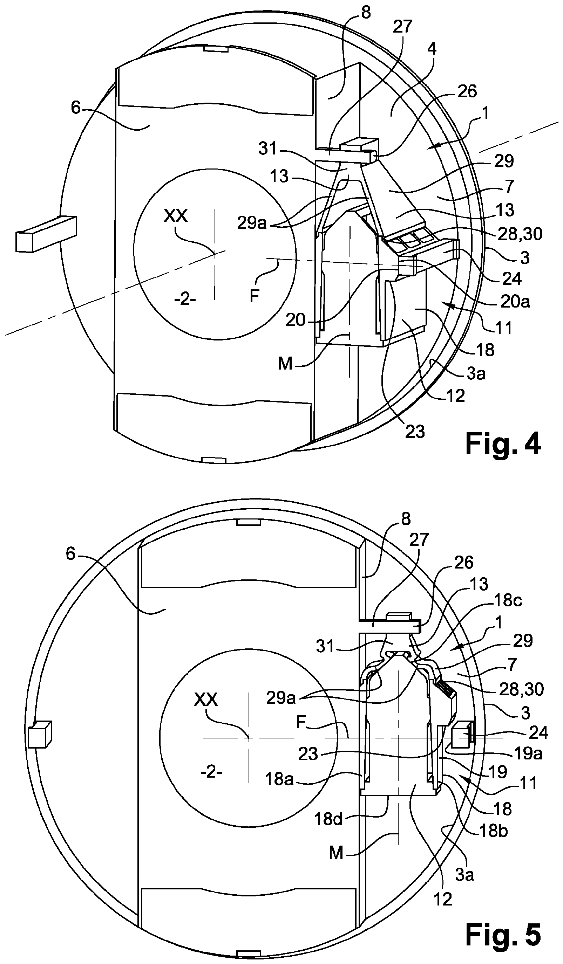

De tels moyens palliatifs de la perte de remplissage 11 sont décrits en référence aux figures 3 à 5, représentant un dispositif 1 qui est une articulation hydroélastique.

De tels moyens palliatifs de la perte de remplissage 11 sont décrits en référence aux figures 3 à 5, dans un mode d'exécution les intégrant, dans lequel le dispositif 1 est une articulation hydrostatique. Pour simplifier, la référence 1 est utilisée tant pour un dispositif selon les figures 1 et 2 que pour une articulation hydrostatique (figures 3 à 5). Plus généralement, on a gardé les mêmes références que celles précédemment utilisées pour les pièces et moyens analogues. Le mode d'exécution particulier qu'est l'articulation hydroélastique des figures 3 à 5 n'est pas limitatif, d'autres pouvant être envisagés, les caractéristiques des moyens palliatifs 11 pouvant être transposées et le cas échéant adaptées.

L'articulation hydroélastique 1 a un axe principal XX, par exemple vertical, et s'inscrit entre deux faces terminales transversales 25. L'armature interne 2 émerge de l'une au moins des faces terminales 25 pour permettre son assemblage (et sur la figure 3, des deux faces terminales 25). L'armature interne 2 est de forme générale cylindrique d'axe XX. L'armature externe 3 est de forme générale tubulaire cylindrique d'axe XX. Son diamètre intérieur est plus grand que le diamètre extérieur de l'armature interne 2, de sorte que l'armature externe 3 entoure latéralement et concentriquement l'armature interne 2. L'entre-deux 4 est de forme générale cylindrique annulaire d'axe XX s'étendant radialement et axialement entre les deux armatures 2 et 3, lesquelles sont espacées radialement l'une de l'autre. Par « axial », il faut comprendre dans la direction de l'axe XX et par « radial », orthogonal à - et passant par - l'axe XX.

Le corps d'amortissement 6 s'étend radialement et axialement. Il est associé de façon fixe et rigide vers l'intérieur à l'armature interne 2 et vers l'extérieur à l'armature externe 3. L'articulation hydroélastique 1 comporte deux chambres d'amortissement 7 analogue et donc, on se bornera à n'en décrire qu'une seule et les organes associés. Les deux chambres d'amortissement 7 sont ménagées d'abord grâce à la conformation du corps d'amortissement 6, en s'étendant radialement et axialement, et en étant diamétralement opposées l'une de l'autre symétriquement par rapport à l'axe XX, dans la direction F, laquelle est ici une direction radiale. Ensuite, les deux chambres d'amortissement 7 sont interposées entre le corps d'amortissement et l'armature externe 3. Chacune des deux chambres d'amortissement 7 est de forme générale cylindrique et limitée par une face 8 dénommée face latérale intérieure 8 de chambre. La face latérale intérieure 8 de chambre est formée d'un premier côté par une partie 16 de la face intérieure 3a de l'armature externe 3, conventionnellement dénommée « partie 16 de chambre de la face intérieure 3a de l'armature externe 3 ». La partie 16 de chambre de la face intérieure 3a de l'armature externe 3 a une forme d'arc cylindrique. La face latérale intérieure 8 de chambre est formée d'un second côté par une face 17 du corps d'amortissement 6, conventionnellement dénommée « face 17 de chambre du corps d'amortissement 6 ». La face 17 de chambre du corps d'amortissement 6 a une forme générale plate.

Il est prévu deux chambres d'amortissement. Mais ce mode d'exécution n'est pas limitatif et exclusif d'autres, un dispositif 1 pouvant comporter une, deux ou un plus grand nombre de chambres d'amortissement. A l'instar du mode d'exécution des figures 1 et 2, il est prévu un canal d'amortissement (ici non représenté), de liaison, allongé et étroit, qui relie de façon communicante les deux chambres d'amortissement 7.

À l'état de remplissage, du liquide d'amortissement 10 à relativement faible viscosité, remplit sous pression l'espace d'amortissement 7+9 formé par les deux chambres d'amortissement 7 et le canal d'amortissement. Compte tenu que le dispositif 1 peut accidentellement être dans un état de perte de remplissage, il est prévu en plus les moyens palliatifs de la perte de remplissage 11, intégrés au dispositif 1, étant incorporés dans celui-ci - notamment de fabrication - en formant avec lui un tout cohérent, à fonctionnement automatique, spécifiques et propres.

Les moyens palliatifs 11 sont inactifs à l'état de remplissage. Ils sont rendus actifs à l'état de perte de remplissage et amènent alors le dispositif 1 à un état de raideur d'un niveau élevé propre à ce qu'il présente un comportement stable, bien que l'espace d'amortissement 7+9 ne soit pas rempli du liquide d'amortissement sous pression.

L'invention porte sur le dispositif 1, en particulier l'articulation hydroélastique 1, avec ses moyens palliatifs 11, et le procédé pour pallier la perte de remplissage d'un tel dispositif 1. Elle porte sur le dispositif 1 dans l'état de remplissage ou bien dans l'état de perte remplissage, assemblé et prêt à l'emploi, ou bien désassemblé en tout ou partie.

Les moyens palliatifs 11 comprennent un système de blocage (qui confondu avec les moyens palliatifs 11) peut prendre aussi la référence 11. Ce système de blocage 11 est spécialement apte et destiné à être intégré au dispositif 1. Il intègre, associe et unit une pièce de blocage 12, intégralement rigide, ayant une face latérale 18, et une pièce de sollicitation 13 globalement autoportante et déformable.

La pièce de sollicitation 13 comprend une partie 26 de support et d'assujettissement à un élément solide de transmission de force 27 du dispositif 1 et une partie 28 de support et d'assujettissement de la pièce de blocage 12. Elle comprend enfin au moins une partie autoportante et déformable 29 reliant ces deux parties de support et d'assujettissement 26 et 28.

Le système de blocage 11 est autoportant et il est supporté par le dispositif 1, à savoir l'élément solide de transmission de force 27 qui, dans la réalisation représentée, est un appendice support prévu sur le corps d'amortissement 6 en saillant de sa face latérale 17 qui fait partie de la face latérale intérieure 8 de la chambre d'amortissement 7, et qui est dénommée face 17 de chambre du corps d'amortissement 6. Le terme « autoportant » doit être compris comme signifiant que le système de blocage 11, supporté par le dispositif 1, et la pièce de blocage 12 qui en fait partie, reste en place et présente une tenue d'ensemble, du fait de sa constitution même.

Sur sa face latérale 18, la pièce de blocage 12 présente une partie de support et d'assujettissement 30, complémentaire de la partie de support et d'assujettissement 28 prévue sur la pièce de sollicitation 13. Ainsi, la pièce de blocage 12 est portée par et assujettie à la pièce de sollicitation 13.

Le système de blocage 11, localisé dans une chambre d'amortissement 7, est apte et destiné à être inactif à l'état de remplissage et rendu actif à l'état de perte de remplissage.

Le procédé pour pallier la perte de remplissage est donc mis en œuvre par les moyens palliatifs 11 intégrés au dispositif 1, avec la pièce de blocage 12 et la pièce de sollicitation 13 comprenant elle-même la partie allongée déformable 29.

Dans la mesure où il est prévu deux chambres d'amortissement 7, il y a deux systèmes de blocage 11. Lorsqu'il y a une pluralité de chambres d'amortissement 7, il est prévu, selon les réalisations, soit un système de blocage 11 dans la totalité des chambres d'amortissement 7 soit un système de blocage 11 dans une partie seulement des chambres 7. En outre, lorsque, comme dans le mode d'exécution des figures 3 à 5, il y a une pluralité de chambres d'amortissement 7 avec une paire de chambres d'amortissement 7 disposées dans la direction F, il est prévu système de blocage 11 dans chacune des chambres d'amortissement 7.

La pièce de blocage 12 et la pièce de sollicitation 13 sont des pièces distinctes assemblées rigidement entre elles grâce à la partie de support et d'assujettissement 28 prévue sur la pièce de sollicitation 13 et la partie de support et d'assujettissement 30 prévue sur la pièce de blocage 12, ces deux parties de support et d'assujettissement 28 et 30 étant complémentaires entre elles et assemblées rigidement entre elles. Mais, dans d'autres réalisations possibles, la pièce de blocage 12 et la pièce de sollicitation 13 forment un ensemble monobloc 12 + 13 venu de fabrication. Dans ce cas, les deux parties de support et d'assujettissement 27 et 30 ne sont pas individualisées mais forment l'interface entre la partie 12 (de blocage) et la partie 13 (de sollicitation) de l'ensemble monobloc 12 + 13. C'est ainsi que doivent être comprises et interprétés les expressions «pièce de blocage 12 », «pièce de sollicitation 13 », « partie de support et d'assujettissement » 28 et 30. Ainsi, les expressions « pièce de blocage 12 », «pièce de sollicitation 13 », «partie de support et d'assujettissement» 26, 28, 30, « élément solide de transmission de force 27 », « appendice », « partie autoportante et déformable 29 », sont utilisées de façon conventionnelle, sans être en soi limitatives, les caractéristiques structurelles et fonctionnelles de ces moyens étant décrits par la suite dans plusieurs réalisations possibles, mais non exclusives d'autres fonctionnellement équivalentes.

La pièce de blocage 12, intégralement rigide pour encaisser et transmettre les forces appliquées au dispositif 1, peut être légère, n'ayant pas besoin d'être pesante puisque portée par la pièce de sollicitation 13. Dans une réalisation, la pièce de blocage 12 est creuse. La pièce de blocage 12 est localisée dans la chambre d'amortissement 7 et elle est apte et destinée, d'une part, à pouvoir être déplacée par la pièce de sollicitation 13 dans une direction M de sollicitation de pièce de blocage, d'autre part, à occuper deux positions extrêmes, à savoir, d'une part, une position inactive, d'autre part, une position active. L'expression « position inactive » doit être comprise comme signifiant que dans cette position la pièce de blocage 12 n'assure pas la fonction de blocage des moyens palliatifs 11. Inversement, l'expression « position active » doit être comprise comme signifiant que dans cette position la pièce de blocage 12 assure la fonction de blocage des moyens palliatifs 11.

La pièce de blocage 12 est dans sa position inactive dans l'état de remplissage. Dans la position inactive, elle assure une discontinuité de transmission de force dans la direction F de sollicitation de l'articulation hydroélastique 1. En effet, la pièce de blocage 12 n'est alors pas en blocage dans la direction F. La pièce de blocage 12 est dans sa position active dans l'état de perte de remplissage. Dans la position active, elle assure une continuité de transmission de force dans la direction F et ajoute une raideur supplémentaire dans cette direction. En effet, la pièce de blocage 12 est alors en blocage dans la direction F. Telles sont les fonctions assurées par la pièce de blocage 12 dans les positions inactive et active, respectivement.

La face latérale 18 de la pièce de blocage 12 présente des zones fonctionnelles coopérant fonctionnellement avec des zones fonctionnelles correspondantes du dispositif 1, y compris des moyens palliatifs 11. Ces zones fonctionnelles sont désignées conventionnellement, comme suit : zone de dégagement 19, zone d'engagement 20, zone de maintien/sollicitation. Le terme « dégagement » doit être compris comme signifiant que la zone 19 est apte et destinée à être dégagée, c'est-à-dire libre et non entravée. Le terme « engagement » doit être compris comme signifiant que la zone 20 est apte et destinée à interférer avec un organe, avec contact et transmission de force. Le terme « maintien/sollicitation » doit être compris comme signifiant que la zone correspondante est apte et destinée au maintien et à la sollicitation de la pièce de blocage 12.

La pièce de blocage 12 présente une face latérale 18 dont le contour s'inscrit dans une enveloppe de forme générale pseudo-rectangulaire. Cette réalisation n'est pas limitative et exclusive d'autres, la pièce de blocage 12 pouvant présenter une face latérale 18 dont le contour est, plus généralement, de forme polygonale ou pseudo-polygonale ou s'inscrivant dans une enveloppe de forme polygonale ou pseudo-polygonale.

La face latérale 18 de la pièce de blocage 12 comporte, d'une part, une première partie de face 18a et une deuxième partie de face 18b, opposées l'une à l'autre. Elle comporte, d'autre part, une troisième partie de face 18c et une quatrième partie de face 18d, opposées l'une à l'autre, reliant la première et la deuxième partie de face 18a et 18b. La deuxième partie de face 18b comporte une partie conformée avec un décrochement 23 en forme générale de double L inversé. La première partie de face 18a est adjacente à une zone de la face 17 de chambre du corps d'amortissement 6. La deuxième partie de face 18b est située vers la partie 16 de chambre de la face 3a de l'armature externe 3.

La pièce de blocage 12 présente une zone de dégagement 19 située en position médiane sur sa deuxième partie de face 18b, deux zones d'engagement 20, l'une située sur la première partie de face 18a et l'autre située en position médiane sur la deuxième partie de face 18b, une zone de maintien/sollicitation située sur l'une des deux parties de face 18a et 18c, correspondant à la partie de support et d'assujettissement 30 ménagée sur la pièce de blocage 12, qui est complémentaire de la partie de support et d'assujettissement 28 prévue sur la pièce de sollicitation 13, les deux parties de support et d'assujettissement 28 et 30 étant solidarisées rigidement entre elles. Dès lors que les deux fonctions sont remplies, la pièce de blocage 12 peut faire l'objet de réalisations autres que celles décrites.

La pièce de sollicitation 13, plus précisément la partie allongée déformable 29, est déformable entre un état comprimé et un état déployé et elle est conçue et agencée à cette fin. Elle est commandée par l'état du dispositif 1, eu égard au remplissage, comme ceci : elle se trouve à l'état comprimé lorsque le dispositif 1 est à l'état de remplissage, elle se trouve à l'état déployé lorsque le dispositif 1 est à l'état de perte de remplissage, et elle est déformée de l'état comprimé à l'état déployé lors du passage de l'état de remplissage à l'état de perte de remplissage.

La pièce de sollicitation 13, plus spécialement la partie allongée déformable 29, est apte et destinée à solliciter la pièce de blocage 12 pour la déplacer, dans la direction M de sollicitation de pièce de blocage, d'une position inactive à la position active lors du passage de l'état comprimé à l'état déployé, et pour la maintenir dans la position active tant que la pièce de sollicitation 13 est à l'état déployé. Dès lors que les fonctions sont remplies, la pièce de sollicitation 13 peut faire l'objet de réalisations autres que celles décrites.

La pièce de sollicitation 13 est commandée par l'état de l'articulation hydroélastique 1 de sorte à être changée de l'état déployé à l'état comprimé lors du passage de l'état de perte de remplissage à l'état de remplissage. Elle est alors apte et destinée en plus à solliciter la pièce de blocage 12 pour la déplacer de sa position active à une position inactive lorsque la pièce de sollicitation 13 passe de l'état déployé à l'état comprimé. La partie autoportante et déformable 29 peut faire l'objet de différentes variantes d'exécution, toutes assurant les fonctions d'être à l'état déployé ou à l'état comprimé, ou de passer de l'une à l'autre en fonction de l'état du dispositif eu égard au remplissage. Le terme « partie », relatif à la partie 29, doit être compris comme signifiant que la partie 29 est un élément de la pièce de sollicitation 13, outre la partie de support et d'assujettissement 26 et la partie de support et d'assujettissement 30. Dans une réalisation, les parties 29, 26 et 30 forment un ensemble monobloc venu de fabrication. Dans d'autres réalisations, il peut s'agir d'éléments distincts assemblés entre eux. La partie autoportante et déformable 29 elle-même peut, selon les cas, être monobloc ou composite. Le terme « allongé » doit être compris comme signifiant que la partie 29 s'étend en longueur dans la direction M de sollicitation de pièce de blocage, au moins dans son état déployé. Cela ne veut pas dire que la partie 29 s'étend obligatoirement dans la seule direction M, mais qu'elle peut être « décomposée » avec une composante dans la direction M et une autre composante dans une direction perpendiculaire, comme la direction F. Etant ainsi étendue en longueur dans la direction M de sollicitation de pièce de blocage, au moins dans son état déployé, la partie autoportante et déformable 29 peut avoir un état comprimé. Le terme « autoportant » doit être compris (à l'instar du système de blocage 11 et de sa pièce de sollicitation 13), comme signifiant que la partie 29, supportée par le dispositif 1 par la partie de support et d'assujettissement 26 prévue sur la pièce de sollicitation 13 et l'appendice support 27, reste en place et présente une tenue d'ensemble, du fait de sa constitution même. Le terme « déformable » doit être compris comme signifiant que la partie 29 peut voir sa forme modifiée, plus précisément que son extension en longueur dans la direction M, peut être modifiée, avec une plus grande valeur à l'état déployé et une plus petite valeur à l'état comprimé. Cette déformation est au-moins une extension faisant passer la partie autoportante et déformable 29 de l'état comprimé à l'état déployé. Dans une réalisation où la partie autoportante et déformable 29 est élastiquement déformable, la déformation peut être également une contraction faisant passer la partie 29 de l'état déployé à l'état comprimé. Dans tous les cas, l'extension en longueur dans la direction M de sollicitation de pièce de blocage n'est pas exclusive d'autres modifications de forme de la partie 29.

La caractéristique selon laquelle la partie allongée 29 est autoportante et déformable peut être obtenue moyennant différents modes d'exécution. Selon les cas, c'est l'intégralité ou la quasi intégralité de la partie 29 qui est déformable, ou bien c'est seulement une ou plusieurs zones déterminées et choisies d'elle qui sont déformables, alors que les autres zones ne sont pas substantiellement déformables. Selon les cas, la déformation est homogène pour l'intégralité ou la quasi intégralité de la partie 29, ou bien elle est différenciée selon une ou plusieurs zones déterminées et choisies de la partie 29, certaines zones étant plus déformables et d'autres moins. Ces réalisations permettent de donner à la partie 29 des formes optimales choisies, à l'état comprimé ou déployé. La partie allongée 29 peut être réalisée avec un matériau déformable, ou comprendre un matériau déformable, comme un élastomère. Les caractéristiques de ce matériau, les caractéristiques de structure, forme et dimensions de la partie 29, et plus généralement ses caractéristiques de constitution sont choisies de sorte que la partie 29 soit autoportante. Dans un autre mode d'exécution, la partie allongée 29 est agencée d'une manière s'apparentant à une structure télescopique. Ces modes d'exécution ne sont pas exclusifs d'autres en vue d'assurer les mêmes fonctions. Le terme « comprimé », qualifiant un état de la partie 29 (comme la pièce de sollicitation 13 dont elle fait partie), doit être compris comme signifiant que la partie 29, alors de plus petit volume, présente une extension plus petite dans la direction M de sollicitation de pièce de blocage et le terme « déployé », comme signifiant que la partie 29, alors de plus grand volume, présente une extension plus grande dans la direction M. Dans une réalisation, non exclusive d'autres, le volume, plus petit à l'état comprimé ou plus grand à l'état déployé, résulte de la différence de pression entre l'extérieur et l'intérieur de la partie 29 qui comporte un ou plusieurs espaces creux internes, sans communication avec l'extérieur de la pièce de sollicitation 13, dans lequel ou lesquels règne une pression qui, d'une part, est plus petite que la pression du liquide d'amortissement 10 du dispositif 1 dans l'état de remplissage et, d'autre part, est plus grande que ou égale à la pression atmosphérique. Par exemple, la partie 29 peut avoir une forme de tube creux fermé ou bien inclure un matériau avec des cellules sans communication avec l'extérieur. Avec une telle réalisation, la partie 29 est comprimée à l'état de remplissage, car la pression régnant dans le ou les espaces creux internes est plus petite que la pression du liquide d'amortissement 10 qui comprime la partie allongée déformable 29 qui ne peut opposer de résistance empêchant cette compression. Alternativement, la partie 29 est déployée à l'état de perte de remplissage, car la pression régnant alors dans le ou les espaces creux internes est plus grande que ou égale à la pression atmosphérique régnant alors dans la chambre d'amortissement 7, du fait de la perte de liquide d'amortissement 10. Par suite, la pression existant dans la partie 29 tend à la déployer et à lui conférer une certaine rigidité d'ensemble. La partie 29 est conformée et agencée de sorte que lors du passage de l'état de remplissage à l'état de perte de remplissage, la partie 28 de support et d'assujettissement de la pièce de blocage 12 soit déplacée dans la direction M. Avec cette réalisation, la partie 29 est déformée par elle-même, sous l'effet de la pression extérieure à elle, relativement à la pression intérieure à elle. C'est ainsi que fonctionne la partie autoportante et déformable 29.

Dans une réalisation, la pièce de sollicitation 13 comporte une partie 29 sous la forme de deux bras 29a de forme générale longiligne ou globalement longiligne, inclinés l'un sur l'autre de part et d'autre de la direction M de sollicitation de pièce de blocage. Les deux bras 29a convergent vers la partie de support et d'assujettissement 26 et divergent vers la partie de support et d'assujettissement 28. Avec cette réalisation, la face latérale 18 de la pièce de blocage 12 présente une double partie de support et d'assujettissement 30 complémentaire d'une double partie de support et d'assujettissement 28 prévue sur la pièce de sollicitation 13, sur les deux bras 29a. Ces doubles parties de support et d'assujettissement 28, 30 sont écartées et situées le long la direction F de sollicitation du dispositif 1.

La forme et la configuration de la partie 29 à l'état comprimé sont conditionnées par les caractéristiques mêmes de constitution et, le cas échéant, par les caractéristiques de constitution de la pièce de blocage 12. Ainsi, la pièce de blocage 12 peut être telle que la partie de face 18a, 18c, où se trouve la zone de maintien/sollicitation comporte deux demies parties de face inclinées l'une par rapport à l'autre, contre lesquelles viennent en appui les deux bras 29a à l'état comprimé.

Dans la réalisation avec deux bras 29a, la partie 29 comporte en outre une partie massive 31 s'étendant dans la direction M de sollicitation de pièce de blocage et comportant, du côté opposé à la pièce de blocage 12, la partie de support et d'assujettissement 26 à l'appendice 27. La partie massive 31 comporte, du même côté que la pièce de blocage 12, la partie de support et d'assujettissement 28 qui coopère avec la partie de support et d'assujettissement 30, la pièce de blocage 12 et la pièce de sollicitation 13 étant alors des pièces distinctes assemblées rigidement entre elles.

Les deux parties de support et d'assujettissement 28 et 30 peuvent avoir des formes complémentaires avec des saillies et creux de positionnement relatif. Elles peuvent être solidarisées rigidement l'une à l'autre par collage, soudage ou analogue.

Dans le mode d'exécution des figures 3 à 5, il est prévu pour chaque pièce de blocage 12, une zone 19a dénommée conventionnellement zone de dégagement en regard 19a, appartenant à une butée d'engagement 24 ménagée dans la chambre d'amortissement 7. Cette butée d'engagement 24 s'étend parallèlement à l'axe XX et est fixée rigidement à ses deux extrémités aux faces terminales 25, en étant située à proximité de la face intérieure 3a de l'armature externe 3. Cette réalisation n'est pas exclusive d'autres, dans lesquelles la fonction de butée d'engagement est réalisée différemment. Avec cette réalisation, il est prévu pour chaque pièce de blocage 12, deux zones 20a dénommées conventionnellement zones d'engagement contiguë 20a, l'une formée par une partie de la face 17 de chambre du corps d'amortissement 6, l'autre appartenant à la butée d'engagement 24. Il est alors prévu pour chaque pièce de blocage 12, une zone de maintien/sollicitation qui est la partie de support et d'assujettissement 30 ménagée sur la pièce de blocage 12, qui est complémentaire et solidarisée rigidement à une zone de maintien/sollicitation correspondante de la pièce de sollicitation 13 qui est pour sa part la partie de support et d'assujettissement 28 prévue sur la pièce de sollicitation 13.

Telles sont les fonctions réalisées par la zone de dégagement en regard 19a, les zones d'engagement contiguë 20a, la zone de maintien/sollicitation correspondante en ce qu'elles coopèrent fonctionnellement avec les zones de dégagement 19, d'engagement 20, de maintien/sollicitation de la pièce de blocage 12. Dès lors que les fonctions assurées par ces zones 19a, 20a et la zone de maintien/sollicitation sont remplies, le dispositif 1 peut faire l'objet de réalisations autres que celles décrites.

Plus généralement, il est prévu que la face latérale 18 de la pièce de blocage 12 présente au moins une zone de dégagement 19 qui, dans la position inactive de la pièce de blocage 12, est située dans la direction F en étant écartée et sans contact d'au moins une zone de dégagement en regard 19a correspondante appartenant ou associée à la face latérale intérieure 8 de chambre, de sorte à assurer la discontinuité de transmission de force dans la direction F de sollicitation du dispositif 1. Selon les cas, il est prévu soit une unique zone de dégagement 19 soit deux zones de dégagement 19 opposées, avec, respectivement, soit une unique zone de dégagement en regard 19a soit deux zones de dégagement en regard 19a opposées. Selon les cas, une telle zone de dégagement en regard 19a appartient ou est associée à la face latérale intérieure 8 de chambre, étant une zone de la face latérale d'une armature 2, 3, ou du corps d'amortissement 6 tournée vers la chambre d'amortissement 7 ou une zone d'une butée d'engagement 24 ménagée dans la chambre d'amortissement 7.

Plus généralement, il est prévu que la face latérale 18 de la pièce de blocage 12 présente au moins une zone d'engagement 20 qui, dans la position active de la pièce de blocage, est située dans la direction F en étant au contact avec transmission de force d'au moins une zone de d'engagement contiguë 20a appartenant ou associée à la face latérale intérieure 8 de chambre, de sorte à assurer la continuité de transmission de force dans la direction F. Selon les cas, il est prévu soit une unique zone d'engagement 20 soit deux zones d'engagement 20 opposées, avec, respectivement, soit une unique zone de d'engagement contiguë 20a soit deux zones d'engagement contiguës 20a. Selon les cas, une zone d'engagement contiguë 20a appartenant ou associée à la face latérale intérieure 8 de chambre est une zone 20a de la face latérale d'une armature 2, 3, ou du corps d'amortissement 6 tournée vers la chambre d'amortissement 7 ou une zone d'une butée d'engagement 24 ménagée dans la chambre d'amortissement 7.

Selon les réalisations, la face latérale 18 de la pièce de blocage 12 présente une zone de dégagement 19 et une zone d'engagement 20 qui sont attenantes ou voisines. Par exemple, la face latérale 18 de la pièce de blocage 12 présente une zone de dégagement 19 et une zone d'engagement 20 attenantes ou voisines qui s'étendent sur une longueur en correspondance avec la course de déplacement de la pièce de blocage 12 entre ses positions extrêmes inactive et active.

Enfin, il est prévu que la face latérale 18 de la pièce de blocage 12 présente au moins une zone de sollicitation/maintien qui est au contact de déplacement d'au moins une zone de sollicitation correspondante appartenant à la pièce de sollicitation 13, dans la direction M, de sorte à assurer le déplacement de la pièce de blocage 12, dans la direction M, d'une position inactive à la position active lors du passage des moyens de sollicitation 13 de l'état comprimé à l'état déployé.

La direction M de sollicitation de pièce de blocage 12 est ou comprend une composante transversale, notamment perpendiculaire ou proche de la perpendiculaire, par rapport à la direction F.

Dans la mesure où la pièce de sollicitation 13 est autoportante et portée par l'appendice 27 auquel elle est rigidement fixée, où la pièce de blocage 12 est rigidement fixée à la pièce de sollicitation 13, le dispositif 1 peut fonctionner avec son axe XX dans n'importe quelle direction, l'état comprimé ou déployé de la pièce de sollicitation 13 étant fonction de la pression extérieure à elle.

## Revendications

1. Dispositif hydroélastique (1) destiné à être fixé à deux éléments d'une machine ou d'un équipement, en vue de les assembler et assurer une transmission d'efforts de l'un à l'autre et d'amortir ou filtrer les vibrations entre eux, du genre comprenant, d'une part, des éléments solides de transmission de force incluant une armature interne (2) et une armature externe (3) espacées délimitant un entre-deux (4), ainsi qu'un corps d'amortissement (6), relativement rigide mais déformable élastiquement, disposé dans l'entre-deux (4) et associé aux deux armatures (2, 3), d'autre part, un espace d'amortissement incluant au moins une chambre d'amortissement (7) limitée par une face latérale intérieure (8) de chambre d'amortissement (7) formée de faces d'éléments solides de transmission de force, et associé au corps d'amortissement (6), le dispositif hydroélastique (1) étant normalement dans un état de remplissage où l'espace d'amortissement est rempli d'un liquide d'amortissement hydraulique sous pression (10) apte et destiné à être déplacé dans l'espace d'amortissement consécutivement à l'exercice sur l'une des armatures (2, 3) par rapport à l'autre d'une force dans une direction (F) de sollicitation du dispositif hydroélastique (1), de sorte à amortir ou filtrer les vibrations, le dispositif hydroélastique (1) pouvant accidentellement être dans un état de perte de remplissage où l'espace d'amortissement n'est plus rempli du liquide d'amortissement (10) sous pression, **caractérisé en ce qu'**il comporte en outre des moyens intégrés, spécifiques et propres, palliatifs de la perte de remplissage (11), inactifs à l'état de remplissage et rendus actifs à l'état de perte de remplissage où ils amènent le dispositif hydroélastique (1) à un état de raideur d'un niveau élevé propre à ce qu'il présente un comportement stable, bien que l'espace d'amortissement ne soit pas rempli du liquide d'amortissement (10) sous pression, ces moyens (11) comprenant un système de blocage incluant une pièce de blocage (12), intégralement rigide, et une pièce de sollicitation (13), déformable, commandée par l'état du dispositif eu égard au remplissage.

2. Dispositif (1) selon la revendication 1, dans lequel les moyens intégrés palliatifs de la perte de remplissage (11) comprennent un système de blocage (11) autoportant et porté par le dispositif (1), intégrant, associant et unissant une pièce de sollicitation (13) et une pièce de blocage (12), avec la pièce de sollicitation (13) portée par et assujettie à un élément solide de transmission de force (17) du dispositif (1) et la pièce de blocage (12) portée par et assujettie à la pièce de sollicitation (13), localisé dans une chambre d'amortissement (7), apte et destiné à être inactif à l'état de remplissage et rendu actif à l'état de perte de remplissage, tel que la pièce de blocage (12), intégralement rigide, est apte et destinée, d'une part, à pouvoir être déplacée par la pièce de sollicitation (13) dans une direction (M) de sollicitation de pièce de blocage (12), d'autre part, à occuper deux positions extrêmes, une position inactive dans l'état de remplissage, dans laquelle la pièce de blocage (12) assure une discontinuité de transmission de force dans la direction (F) de sollicitation du dispositif (1), n'étant pas en blocage dans la direction (F) de sollicitation du dispositif (1), et une position active dans l'état de perte de remplissage, dans laquelle la pièce de blocage (12), étant en blocage dans la direction (F) de sollicitation du dispositif (1), assure une continuité de transmission de force dans la direction (F) de sollicitation du dispositif (1) et ajoute une raideur supplémentaire dans cette direction, et tel que la pièce de sollicitation (13) est déformable entre un état comprimé et un état déployé et commandée par l'état du dispositif (1), de sorte que la pièce de sollicitation (13) se trouve à l'état comprimé lorsque le dispositif (1) est à l'état de remplissage, et à l'état déployé lorsque le dispositif (1) est à l'état de perte de remplissage, que la pièce de sollicitation (13) est déformée de l'état comprimé à l'état déployé lors du passage de l'état de remplissage à l'état de perte de remplissage, qu'elle est apte et destinée à solliciter la pièce de blocage (12) pour la déplacer dans la direction (M) de sollicitation de pièce de blocage (12), d'une position inactive à la position active lors du passage de l'état comprimé à l'état déployé et la maintenir dans la position active tant que la pièce de sollicitation (13) est à l'état déployé.

3. Dispositif (1) selon la revendication 2, dans lequel la pièce de sollicitation (13), déformable élastiquement, est commandée par l'état du dispositif (1) de sorte à être déformée de l'état déployé à l'état comprimé lors du passage de l'état de perte de remplissage à l'état de remplissage, et est apte et destinée à solliciter la pièce de blocage (12) pour la déplacer de sa position active à une position inactive lors du passage de l'état déployé à l'état comprimé.

4. Dispositif (1) selon l'une des revendications 2 et 3, dans lequel la pièce de sollicitation (13) comprend une partie de support et d'assujettissement (26) à un élément solide de transmission de force (27) du dispositif (1), une partie de support et d'assujettissement (28) de la pièce de blocage (12), et, reliant ces deux parties de support et d'assujettissement (26, 28), au moins une partie allongée autoportante et déformable (29) et commandée par l'état du dispositif (1) de sorte à être déformée entre ses deux états, la partie de support et d'assujettissement (28) de la pièce de blocage (12) étant déplacée dans la direction (M) de sollicitation de pièce de blocage (12).

5. Dispositif (1) selon la revendication 4, dans lequel la partie autoportante et déformable (29), réalisée en un matériau déformable, comporte un ou plusieurs espaces creux internes, sans communication avec l'extérieur de la pièce de sollicitation (13), dans lequel ou lesquels règne une pression qui, est plus petite que la pression du liquide d'amortissement (10) du dispositif (1) se trouvant dans l'état de remplissage et plus grande que ou égale à la pression atmosphérique.

6. Dispositif (1) selon la revendication 5, dans lequel la partie autoportante et déformable (29) est soit comprimée lorsque dispositif (1) est à l'état de remplissage, la pression régnant dans le ou les espaces creux internes étant plus petite que la pression du liquide d'amortissement (10) de sorte qu'il comprime la partie autoportante et déformable (29), soit déployée lorsque dispositif (1) est à l'état de perte de remplissage, la pression régnant dans le ou les espaces creux internes étant plus grande que ou égale à la pression atmosphérique régnant dans la chambre d'amortissement (7) du fait de la perte de liquide d'amortissement (10).

7. Dispositif (1) selon l'une des revendications 4 à 6, dans lequel la partie autoportante et déformable (29) est conformée de sorte que lors du passage de l'état de remplissage à l'état de perte de remplissage, la partie de support et d'assujettissement (28) soit déplacée dans la direction (M) de sollicitation de pièce de blocage (12).

8. Dispositif (1) selon l'une des revendications 4 à 7, dans lequel la pièce de sollicitation (13) comporte une partie autoportante et déformable (29) sous la forme de deux bras (29a) inclinés l'un sur l'autre, d'une part, convergeant vers la partie de support et d'assujettissement (26), d'autre part, divergeant vers la partie de support et d'assujettissement (28), une double partie de support et d'assujettissement de la pièce de blocage (12) étant ainsi prévue.

9. Dispositif (1) selon l'une des revendications 4 à 8, dans lequel la partie de support et d'assujettissement (26) est portée par un appendice support (27) saillant de la face (17) du corps d'amortissement (6), en particulier venu de fabrication avec lui.

10. Dispositif (1) selon l'une des revendications 2 à 9, dans lequel la face latérale (18) de la pièce de blocage (12) présente au moins une zone de dégagement (19) qui - dans la position inactive de la pièce de blocage (12) - est située dans la direction (F) de sollicitation du dispositif (1) en étant écartée et sans contact d'au moins une zone de dégagement en regard (19a) correspondante appartenant ou associée à la face latérale intérieure (8) de chambre d'amortissement (7), de sorte à assurer la discontinuité de transmission de force dans la direction (F) de sollicitation du dispositif (1).

11. Dispositif (1) selon la revendication 10, dans lequel une zone de dégagement en regard (19a) appartenant ou associée à la face latérale intérieure (8) de chambre d'amortissement (7) est une zone de la face latérale d'une armature (2, 3) ou du corps d'amortissement (6) tournée vers la chambre d'amortissement (7) ou une zone d'une butée d'engagement (24) ménagée dans la chambre d'amortissement (7).

12. Dispositif (1) selon l'une des revendications 2 à 11, dans lequel la face latérale (18) de la pièce de blocage (12) présente au moins une zone d'engagement (20) qui - dans la position active de la pièce de blocage (12) - est située dans la direction (F) de sollicitation du dispositif (1) en étant au contact avec transmission de force d'au moins une zone d'engagement contiguë (20a) appartenant ou associée à la face latérale intérieure (8) de chambre d'amortissement (7), de sorte à assurer la continuité de transmission de force dans la direction (F) de sollicitation du dispositif (1).

13. Dispositif (1) selon la revendication 12, dans lequel une zone d'engagement contiguë (20a) appartenant ou associée à la face latérale intérieure (8) de chambre d'amortissement (7) est une zone de la face latérale d'une armature (2, 3) ou du corps d'amortissement (6) tournée vers la chambre d'amortissement (7) ou une zone d'une butée d'engagement (24) ménagée dans la chambre d'amortissement (7).

14. Dispositif (1) selon l'une des revendications 2 à 13, dans lequel la face latérale (18) de la pièce de blocage (12) présente une zone de maintien/sollicitation qui est associée solidement à une zone de maintien/sollicitation correspondante appartenant à la pièce de sollicitation (13), de sorte à assurer d'une part le maintien de la pièce de blocage (12) dans la position active ou dans la position inactive selon que la pièce de sollicitation (13) est à l'état comprimé ou à l'état déployé, d'autre part, le déplacement de la pièce de blocage (12) - dans la direction (M) de sollicitation de pièce de blocage (12) - d'une position inactive à la position active lors du passage de la pièce de sollicitation (13) de l'état comprimé à l'état déployé.

15. Dispositif (1) selon la revendication 14, dans lequel la face latérale (18) de la pièce de blocage (12) présente dans la zone de maintien/sollicitation une partie de support et d'assujettissement (30) complémentaire de la partie de support et d'assujettissement (28).

16. Dispositif (1) selon la revendication 15, dans lequel la face latérale (18) de la pièce de blocage (12) comporte une partie conformée avec un décrochement (23) en forme générale de double L inversé, avec d'un côté une zone de dégagement (19) et de l'autre côté une zone d'engagement (20).

17. Dispositif (1) selon l'une des revendications 1 à 16, qui est une articulation hydroélastique (1) présentant un axe principal (XX) et s'inscrivant entre deux faces terminales transversales (25), l'armature interne (2) émergeant de l'une au moins des faces terminales (25) pour son assemblage, dans lequel l'armature interne (2) est de forme générale cylindrique, l'armature externe (3) est de forme générale tubulaire cylindrique, dont le diamètre intérieur est plus grand que le diamètre extérieur de l'armature interne (2), de sorte que l'armature externe (3) entoure latéralement et concentriquement l'armature interne (2), l'entre-deux (4) est de forme générale cylindrique annulaire s'étendant radialement et axialement entre les deux armatures (2, 3) espacées radialement l'une de l'autre, le corps d'amortissement (6) s'étend radialement et axialement et est associé de façon fixe et rigide vers l'intérieur à l'armature interne (2) et vers l'extérieur à l'armature externe (3), deux chambres d'amortissement (7) sont ménagées grâce à la conformation du corps d'amortissement (6), en s'étendant radialement et axialement, en étant diamétralement opposées dans la direction (F) de sollicitation du dispositif (1), et interposées entre le corps d'amortissement (6) et l'armature externe (3), un canal d'amortissement, de liaison, allongé et étroit, relie de façon communicante les deux chambres d'amortissement (7), à l'état de remplissage, le liquide d'amortissement hydraulique (10) remplit sous pression l'espace d'amortissement formé par les deux chambres d'amortissement (7) et le canal d'amortissement, la direction (F) de sollicitation du dispositif (1) est radiale.

18. Dispositif (1) selon la revendication 17, dans lequel chaque chambre d'amortissement (7) est limitée par une face latérale intérieure (8) de chambre d'amortissement (7) formée d'un côté par une partie de chambre d'amortissement (7) de la face intérieure (3a) de l'armature externe (3) et de l'autre côté par une face de chambre d'amortissement (7) du corps d'amortissement (6).

19. Dispositif (1) selon la revendication 18, dans lequel chaque pièce de blocage (12) présente une face latérale (18) dont le contour est de forme pseudo-rectangulaire ou s'inscrivant dans une enveloppe de forme pseudo-rectangulaire, avec une première partie de face (18a) adjacente à une zone de la face de chambre d'amortissement (7) du corps d'amortissement (6), une deuxième partie de face (18b), opposée à la première partie de face (18a), située vers la partie de chambre d'amortissement (7) de la face intérieure (3a) de l'armature externe (3), et une troisième et une quatrième parties de face (18c, 18d), opposées l'une à l'autre, reliant la première et la deuxième parties de face (18a, 18b).

20. Dispositif (1) selon la revendication 19, dans lequel la deuxième partie de face (18b) de la face latérale (18) de chaque pièce de blocage (12) comporte une partie conformée avec un décrochement (23) en forme générale de double L inversé, et dans lequel la zone de dégagement (19) de la face latérale (18) est située en position médiane sur la deuxième partie de face (18b) de la face latérale (18).

21. Dispositif (1) selon l'une des revendications 19 et 20, qui comprend, pour chaque pièce de blocage (12), une zone de dégagement en regard (19a) appartenant à une butée d'engagement (24) ménagée dans la chambre d'amortissement (7), et le cas échéant deux zones d'engagement en regard (19a) qui, respectivement est formée par une partie de la face de chambre d'amortissement (7) du corps d'amortissement (6) et appartient à la butée d'engagement (24).

22. Moyens palliatifs de la perte de remplissage (11) d'un dispositif selon l'une des revendications 1 à 21, spécialement aptes et destinés à être intégrés, en plus, à un tel dispositif (1), ces moyens (11) étant spécifiques et propres et comprenant un système de blocage incluant une pièce de blocage (12), intégralement rigide, et une pièce de sollicitation (13), déformable, commandée par l'état du dispositif eu égard au remplissage.

23. Procédé pour pallier la perte de remplissage d'un dispositif hydroélastique (1) par la mise en œuvre de moyens palliatifs de la perte de remplissage (11) selon la revendication 22.

## Patentansprüche

1. Hydroelastische Vorrichtung (1), die dazu bestimmt ist, an zwei Elementen einer Maschine oder Anlage befestigt zu werden, um sie zusammenzufügen und eine Übertragung von Kräften von dem einen zum anderen sicherzustellen und Schwingungen zwischen diesen zu dämpfen oder auszufiltern, von der Art, die einerseits feste Kraftübertragungselemente mit einem inneren Beschlag (2) und einem äußeren Beschlag (3), die voneinander beabstandet sind und einen Zwischenraum (4) begrenzen, sowie einen relativ steifen, aber elastisch verformbaren Dämpfungskörper (6), der in dem Zwischenraum (4) angeordnet und den beiden Beschlägen (2, 3) zugeordnet ist, und andererseits einen Dämpfungsraum enthält, der zumindest eine Dämpfungskammer (7) umfasst, die von einer aus Flächen von festen Kraftübertragungselementen gebildeten, inneren Seitenfläche (8) der Dämpfungskammer (7) begrenzt wird, und der dem Dämpfungskörper (6) zugeordnet ist, wobei sich die hydroelastische Vorrichtung (1) normalerweise in einem Füllzustand befindet, in dem der Dämpfungsraum mit einer unter Druck stehenden hydraulischen Dämpfungsflüssigkeit (10) gefüllt ist, die dazu geeignet und bestimmt ist, in dem Dämpfungsraum infolge der Einwirkung einer Kraft auf einen der Beschläge (2) relativ zu dem anderen in einer Beaufschlagungsrichtung (F) der hydroelastischen Vorrichtung (1) verdrängt zu werden, um die Schwingungen zu dämpfen oder auszufiltern, wobei die hydroelastische Vorrichtung (1) unbeabsichtigt in einem Füllungsverlustzustand sein kann, wo der Dämpfungsraum nicht mehr mit unter Druck stehender Dämpfungsflüssigkeit (10) gefüllt ist, **dadurch gekennzeichnet, dass**
sie ferner integrierte, spezifische Eigenmittel (11) zum Abschwächen des Füllungsverlustes umfasst, die im Füllzustand inaktiv sind und im Zustand des Füllungsverlustes aktiviert werden, wo sie die hydroelastische Vorrichtung (1) in einen Zustand hoher Steifigkeit bringen, so dass diese ein stabiles Verhalten zeigt, obgleich der Dämpfungsraum nicht mit der unter Druck stehenden Dämpfungsflüssigkeit (10) gefüllt ist, wobei diese Mittel (11) ein Sperrsystem enthalten, das ein vollständig starres Sperrteil (12) und ein verformbares Beaufschlagungsteil (13) umfasst, das durch den füllungsbezogenen Zustand der Vorrichtung gesteuert wird.

2. Vorrichtung (1) nach Anspruch 1, wobei die integrierten Mittel (11) zum Abschwächen des Füllungsverlustes ein selbsttragendes Sperrsystem (11) enthalten, das von der Vorrichtung (1) getragen wird und ein Beaufschlagungsteil (13) und ein Sperrteil (12) integriert, zuordnet und vereinigt, wobei das Beaufschlagungsteil (13) von einem festen Kraftübertragungselement (17) der Vorrichtung (1) getragen wird und an diesem befestigt ist und wobei das Sperrteil (12) von dem Beaufschlagungsteil (13) getragen wird und an diesem befestigt ist, wobei das Sperrsystem in einer Dämpfungskammer (7) angeordnet ist, dazu ausgelegt und bestimmt ist, im Füllzustand inaktiv zu sein und im Füllungsverlustzustand aktiviert zu werden, so dass das vollständig starre Sperrteil (12) dazu ausgelegt und bestimmt ist, einerseits durch das Beaufschlagungsteil (13) in einer Beaufschlagungsrichtung (M) des Sperrteils (12) verlagert werden zu können und anderseits zwei Endpositionen einzunehmen, nämlich eine inaktive Position im Füllzustand, in der das Sperrteil (12) eine Unterbrechung in der Kraftübertragung in Beaufschlagungsrichtung (F) der Vorrichtung (1) sicherstellt und in Beaufschlagungsrichtung (F) der Vorrichtung (1) nicht sperrt, und eine aktive Position im Zustand des Füllungsverlustes, in der das Sperrteil (12) in Beaufschlagungsrichtung (F) der Vorrichtung (1) sperrt und eine Weiterleitung der Kraftübertragung in Beaufschlagungsrichtung (F) der Vorrichtung (1) sicherstellt und eine zusätzliche Steifigkeit in dieser Richtung hinzufügt, und so dass das Beaufschlagungsteil (13) zwischen einem komprimierten Zustand und einem expandierten Zustand verformbar ist und durch den Zustand der Vorrichtung (1) gesteuert wird, so dass sich das Beaufschlagungsteil (13) im komprimierten Zustand befindet, wenn sich die Vorrichtung (1) im Füllzustand befindet, und im expandierten Zustand befindet, wenn sich die Vorrichtung (1) im Füllungsverlustzustand befindet, dass beim Übergang vom Füllzustand in den Füllungsverlustzustand das Beaufschlagungsteil (13) vom komprimierten Zustand in den expandierten Zustand verformt wird, dass es dazu ausgelegt und bestimmt ist, das Sperrteil (12) zu beaufschlagen, um es beim Übergang vom komprimierten Zustand in den expandierten Zustand aus einer inaktiven Position in die aktive Position in der Richtung (M) der Beaufschlagung des Sperrteils (12) zu bewegen und es in der aktiven Position zu halten, solange sich das Beaufschlagungsteil (13) im expandierten Zustand befindet.

3. Vorrichtung (1) nach Anspruch 2, wobei das elastisch verformbare Beaufschlagungsteil (13) durch den Zustand der Vorrichtung (1) so gesteuert wird, dass es beim Übergang vom Füllungsverlustzustand in den Füllzustand vom expandierten Zustand in den komprimierten Zustand verformt wird, und dazu geeignet und bestimmt ist, das Sperrteil (12) zu beaufschlagen, um es beim Übergang vom expandierten Zustand in den komprimierten Zustand aus seiner aktiven Position in eine inaktive Position zu bewegen.

4. Vorrichtung (1) nach einem der Ansprüche 2 und 3, wobei das Beaufschlagungsteil (13) einen Stütz- und Befestigungsabschnitt (26) an einem festen Kraftübertragungselement (27) der Vorrichtung (1), einen Stütz- und Befestigungsabschnitt (28) für das Sperrteil (12) und zumindest einen diese beiden Stütz- und Befestigungsteile (26, 28) verbindenden selbsttragenden und verformbaren länglichen Abschnitt (29) enthält, der durch den Zustand der Vorrichtung (1) gesteuert wird, um zwischen seinen beiden Zuständen verformt zu werden, wobei der Stütz- und Befestigungsabschnitt (28) für das Sperrteil (12) in Beaufschlagungsrichtung (M) des Sperrteils (12) verschoben wird.

5. Vorrichtung (1) nach Anspruch 4, wobei der selbsttragende und verformbare Abschnitt (29) aus einem verformbaren Material herstellt ist und einen bzw. mehrere innere Hohlräume ohne Verbindung zur Außenseite des Beaufschlagungsteils (13) aufweist, in dem bzw. denen ein Druck herrscht, der geringer als der Druck der Dämpfungsflüssigkeit (10) der Vorrichtung (1) im Füllzustand und größer oder gleich dem Atmosphärendruck ist.

6. Vorrichtung (1) nach Anspruch 5, wobei der selbsttragende und verformbare Abschnitt (29) entweder komprimiert ist, wenn sich die Vorrichtung (1) im Füllzustand befindet, wobei der Druck in dem bzw. den inneren Hohlräumen kleiner als der Druck der Dämpfungsflüssigkeit (10) ist, so dass diese den selbsttragenden und verformbaren Abschnitt (29) komprimiert, oder expandiert ist, wenn sich die Vorrichtung (1) im Zustand des Füllungsverlustes befindet, wobei der Druck in dem bzw. den inneren Hohlräumen aufgrund des Verlustes an Dämpfungsflüssigkeit (10) größer oder gleich dem Atmosphärendruck in der Dämpfungskammer (7) ist.

7. Vorrichtung (1) nach einem der Ansprüche 4 bis 6, wobei der selbsttragende und verformbare Abschnitt (29) so ausgeformt ist, dass beim Übergang vom Füllzustand in den Füllungsverlustzustand der Stütz- und Befestigungsabschnitt (28) in Beaufschlagungsrichtung (M) des Sperrteils (12) verlagert wird.

8. Vorrichtung (1) nach einem der Ansprüche 4 bis 7, wobei das Beaufschlagungsteil (13) einen selbsttragenden und verformbaren Abschnitt (29) in Form von zwei zueinander geneigten Armen (29a) aufweist, die einerseits zum Stütz- und Befestigungsabschnitt (26) hin konvergieren, andererseits zum Stütz- und Befestigungsabschnitt (28) hin divergieren, wodurch ein doppelter Stütz- und Befestigungsabschnitt für das Sperrteil (12) vorgesehen ist.

9. Vorrichtung (1) nach einem der Ansprüche 4 bis 8, wobei der Stütz- und Befestigungsabschnitt (26) von einem von der Stirnseite (17) des Dämpfungskörpers (6) abstehenden, insbesondere angeformten Stützfortsatz (27) getragen wird.

10. Vorrichtung (1) nach einem der Ansprüche 2 bis 9, wobei die Seitenfläche (18) des Sperrteils (12) zumindest einen Freigabebereich (19) aufweist, der - in der inaktiven Position des Sperrteils (12) - in Beaufschlagungsrichtung (F) der Vorrichtung (1) liegt und von zumindest einem entsprechenden Freigabebereich (19a), der zur inneren Seitenfläche (8) der Dämpfungskammer (7) gehört oder dieser zugeordnet ist, beabstandet und berührungslos ist, so dass eine Unterbrechung in der Kraftübertragung in Beaufschlagungsrichtung (F) der Vorrichtung (1) sichergestellt ist.

11. Vorrichtung (1) nach Anspruch 10, wobei ein der inneren Seitenfläche (8) der Dämpfungskammer (7) zugehöriger oder zugeordneter gegenüberliegender Freigabebereich (19a) ein Bereich der der Dämpfungskammer (7) zugewandten Seitenfläche eines Beschlags (2, 3) oder des Dämpfungskörpers (6) oder ein Bereich eines in der Dämpfungskammer (7) ausgebildeten Eingriffsanschlags (24) ist.

12. Vorrichtung (1) nach einem der Ansprüche 2 bis 11, wobei die Seitenfläche (18) des Sperrteils (12) zumindest einen Eingriffsbereich (20) aufweist, der - in der aktiven Position des Sperrteils (12) - in Beaufschlagungsrichtung (F) der Vorrichtung (1) liegt und mit zumindest einem angrenzenden Eingriffsbereich (20a), der der inneren Seitenfläche (8) der Dämpfungskammer (7) zugehört oder zugeordnet ist, in kraftübertragendem Kontakt steht, so dass die Weiterleitung der Kraftübertragung in Beaufschlagungsrichtung (F) der Vorrichtung (1) sichergestellt ist.

13. Vorrichtung (1) nach Anspruch 12, wobei ein der inneren Seitenfläche (8) der Dämpfungskammer (7) zugehöriger oder zugeordneter, angrenzender Eingriffsbereich (20a) ein Bereich der der Dämpfungskammer (7) zugewandten Seitenfläche eines Beschlags (2, 3) oder des Dämpfungskörpers (6) oder ein Bereich eines in der Dämpfungskammer (7) ausgebildeten Eingriffsanschlags (24) ist.

14. Vorrichtung (1) nach einem der Ansprüche 2 bis 13, wobei die Seitenfläche (18) des Sperrteils (12) einen Halte-/Beaufschlagungsbereich aufweist, der mit einem entsprechenden Halte-/Beaufschlagungsbereich des Beaufschlagungsteils (13) fest verbunden ist, so dass einerseits der Halt des Sperrteils (12) in der aktiven Position oder in der inaktiven Position, je nachdem, ob das Beaufschlagungsteil (13) im komprimierten Zustand oder im expandierten Zustand ist, und andererseits die Verlagerung des Sperrteils (12) in Beaufschlagungsrichtung (M) des Sperrteils (12) von einer inaktiven Position in die aktive Position beim Übergang des Beaufschlagungsteils (13) von dem komprimierten Zustand in den expandierten Zustand sichergestellt ist.

15. Vorrichtung (1) nach Anspruch 14, wobei die Seitenfläche (18) des Sperrteils (12) im Halte-/Beaufschlagungsbereich einen zum Stütz- und Befestigungsabschnitt (28) komplementären Stütz- und Befestigungsabschnitt (30) aufweist.

16. Vorrichtung (1) nach Anspruch 15, wobei die Seitenfläche (18) des Sperrteils (12) einen Abschnitt aufweist, der mit einer Stufe (23) in umgekehrter Doppel-L-Form mit einem Freigabebereich (19) auf einer Seite und einem Eingriffsbereich (20) auf der anderen Seite ausgeformt ist.

17. Vorrichtung (1) nach einem der Ansprüche 1 bis 16, bei der es sich um ein hydroelastisches Gelenk (1) mit einer Hauptachse (XX) handelt, das zwischen zwei quer verlaufenden Stirnflächen (25) eingepasst ist, wobei der innere Beschlag (2) zur Montage aus mindestens einer der Stirnflächen (25) austritt, wobei der innere Beschlag (2) zylinderförmig ist und der äußere Beschlag (3) rohrzylinderförmig ist, dessen Innendurchmesser größer ist als der Außendurchmesser des inneren Beschlags (2), so dass der äußere Beschlag (3) den inneren Beschlag (2) seitlich und konzentrisch umgibt, wobei der Zwischenraum (4) ringzylinderförmig ist und sich radial und axial zwischen den beiden radial voneinander beabstandeten Beschlägen (2, 3) erstreckt, wobei der Dämpfungskörper (6) sich radial und axial erstreckt und nach innen mit dem inneren Beschlag (2) und nach außen mit dem äußeren Beschlag (3) fest und starr verbunden ist, wobei durch die Formgebung des Dämpfungskörpers (6) zwei Dämpfungskammern (7) ausgebildet sind, die sich radial und axial erstrecken und in Beaufschlagungsrichtung (F) der Vorrichtung (1) diametral gegenüberliegen und zwischen dem Dämpfungskörper (6) und dem äußeren Beschlag (3) angeordnet sind, wobei ein länglicher, schmaler Verbindungsdämpfungskanal die beiden Dämpfungskammern (7) kommunizierend verbindet, wobei im Füllzustand die hydraulische Dämpfungsflüssigkeit (10) den von den beiden Dämpfungskammern (7) und dem Dämpfungskanal gebildeten Dämpfungsraum unter Druck ausfüllt, und wobei die Beaufschlagungsrichtung (F) der Vorrichtung (1) radial verläuft.

18. Vorrichtung (1) nach Anspruch 17, wobei jede Dämpfungskammer (7) von einer inneren Seitenfläche (8) der Dämpfungskammer (7) begrenzt wird, die auf der einen Seite von einem Abschnitt der Dämpfungskammer (7) der Innenfläche (3a) des äußeren Beschlags (3) und auf der anderen Seite von einer Fläche der Dämpfungskammer (7) des Dämpfungskörpers (6) gebildet wird.

19. Vorrichtung (1) nach Anspruch 18, wobei jedes Sperrteil (12) eine Seitenfläche (18) mit einer pseudo-rechteckförmigen Kontur aufweist oder in eine pseudo-rechteckförmige Umhüllung passt, wobei ein erster Flächenabschnitt (18a) an einen Bereich der Fläche der Dämpfungskammer (7) des Dämpfungskörpers (6) angrenzt, ein zweiter Flächenabschnitt (18b) dem ersten Flächenabschnitt (18a) gegenüberliegt und in Richtung des Abschnitts der Dämpfungskammer (7) der Innenfläche (3a) des äußeren Beschlags (3) angeordnet ist, und ein dritter und ein vierter Flächenabschnitt (18c, 18d) einander gegenüberliegen und den ersten und den zweiten Flächenabschnitt (18a, 18b) verbinden.

20. Vorrichtung (1) nach Anspruch 19, wobei der zweite Flächenabschnitt (18b) der Seitenfläche (18) jedes Sperrteils (12) einen Abschnitt aufweist, der mit einer Stufe (23) in umgekehrter Doppel-L-Form ausgeformt ist, und wobei der Freigabebereich (19) der Seitenfläche (18) in einer mittleren Position an dem zweiten Flächenabschnitt (18b) der Seitenfläche (18) angeordnet ist.

21. Vorrichtung (1) nach einem der Ansprüche 19 und 20, wobei sie für jedes Sperrteil (12) einen zu einem in der Dämpfungskammer (7) ausgebildeten Eingriffsanschlag (24) gehörenden, gegenüberliegenden Freigabebereich (19a) und gegebenenfalls zwei gegenüberliegende Eingriffsbereiche (19a) aufweist, die jeweils von einem Abschnitt der Fläche der Dämpfungskammer (7) des Dämpfungskörpers (6) gebildet werden und zu dem Eingriffsanschlag (24) gehören.

22. Mittel (11) zum Abschwächen des Füllungsverlustes einer Vorrichtung nach einem der Ansprüche 1 bis 21, die insbesondere dazu geeignet und bestimmt sind, zusätzlich in eine solche Vorrichtung (1) integriert zu werden, wobei diese Mittel (11) spezifisch und eigen sind und ein Sperrsystem enthalten, das ein vollständig starres Sperrteil (12) und ein verformbares Beaufschlagungsteil (13) enthält, das durch den füllungsbezogenen Zustand der Vorrichtung gesteuert wird.

23. Verfahren zum Abschwächen des Füllungsverlustes einer hydroelastischen Vorrichtung (1) durch Anwendung von Mitteln (11) zum Abschwächen des Füllungsverlustes gemäß Anspruch 22.

## Claims

1. Hydroelastic device (1) intended to be attached to two parts of a machine or piece of equipment in order to connect them and provide a transmission of forces from one to the other and to dampen or filter the vibrations between them, of a type comprising, on one hand, solid force transmission elements including an internal reinforcement (2) and an external reinforcement (3) spaced in a way which delimits a gap (4), as well as a damping mass (6) which is relatively rigid but elastically deformable, positioned in the gap (4) and connected with the two reinforcements (2, 3), and on the other hand, a damping space including at least one damping chamber (7) delimited by an interior lateral surface (8) of the damping chamber (7) formed by surfaces of solid force transmission elements, and attached to the damping mass (6), the hydroelastic device (1) being normally in a full state in which the damping space is filled with a pressurized hydraulic damping liquid (10) suitable for being and intended to be displaced within the damping space following the exertion on one of the reinforcements (2, 3) in relation to the other of a force in one direction (F) applied by the hydroelastic device (1), in order to dampen or filter the vibrations, the hydroelastic device (1) can accidentally being in an unfilled state where the damping space is no longer filled by the pressurised damping liquid (10), **characterized in that** this further involves integrated specific and proprietary palliative means for the unfilled state (11), inactive in the full state and rendered active upon the unfilled state where they cause the hydroelastic device (1) to be in a state of heightened stiffness so that it will exhibit stable behaviour, even though the damping space is not filled with the pressurised damping liquid (10), these means (11) comprising a locking system including a fully rigid locking part (12), as well as a deformable load part (13), controlled by the state of the device with regard to filling.

2. Device (1) according to claim 1, wherein the integrated palliative means of the loss of filling (11) comprise a self-supporting locking system (11) carried by the device (1), integrating, associating and uniting a load part (13) and a locking member (12), with the load part (13) carried by and secured to a solid force transmitting element (17) of the device (1) and the locking member (12) carried by and secured to the load part (13), located in a damping chamber (7), suitable and intended to be inactive in the filling state and made active in the loss of filling state, such that the fully rigid locking part (12) is suitable and intended, on the one hand, to be movable by the load part (13) in a direction (M) of loading of the locking part (12), on the other hand, to occupy two extreme positions, an inactive position in the filling state, in which the locking part (12) ensures a force transmission discontinuity in the direction (F) of loading of the device (1), not being locked in the direction (F) of loading of the device (1), and an active position in the state of loss of filling, in which the locking part (12), being locked in the direction (F) of loading of the device (1), ensures a continuity of force transmission in the direction (F) of loading of the device (1) and adds additional stiffness in this direction, and such that the load part (13) is deformable between a compressed state and a deployed state and controlled by the state of the device (1), so that the load part (13) is in the compressed state when the device (1) is in the filled state, and in the deployed state when the device (1) is in the loss of filling state, that the load part (13) is deformed from the compressed state to the deployed state when changing from the filling state to the loss of filling state, that it is suitable and intended to load the locking part (12) to move it in the direction (M) of load of the locking part (12) from an inactive position to the active position when changing from the compressed to the extended state and to keep it in the active position as long as the load part (13) is in the extended state.

3. Device (1) according to claim 2, in which the load part (13), which is elastically deformable, is controlled by the state of the device (1) such that it is changed from the deployed state to the compressed state during the changing from the unfilled state to the full state, and it is suitable and intended to act upon the locking part (12) in order to move it from its active position to an inactive position during its changing from the deployed state to the compressed state.

4. Device (1) according to one of claims 2 and 3, wherein the load part (13) comprises a support and attachment part (26) to a solid force transmission element (27) of the device (1), a support and attachment part (28) of the locking part (12), and, connecting these two support and attachment parts (26, 28), at least one self-supporting and deformable elongated part (29) controlled by the state of the device (1) so as to be deformed between its two states, the support and attachment part (28) of the locking part (12) being moved in the direction (M) of loading of the locking part (12).

5. Device (1) according to claim 4, in which the self-supporting and deformable part (29) made out of a deformable material, has one or more hollow internal spaces, without communication with the outside of the load part (13), in which there is a pressure which is smaller than the pressure of the damping liquid (10) of the device (1) in the full state and is greater than or equal to atmospheric pressure.

6. Device (1) according to claim 5, wherein the self-supporting and deformable part (29) is either compressed when the device (1) is in the filling state, the pressure in the one or more internal hollow spaces being smaller than the pressure of the damping liquid (10) so that it compresses the self-supporting and deformable part (29), is deployed when the device (1) is in the state of loss of filling, the pressure in the internal cavity or cavities being greater than or equal to the atmospheric pressure in the damping chamber (7) due to the loss of damping liquid (10).

7. Device (1) according to claims 4 to 6, in which the self-supporting and deformable part (29) is formed such that during the change from the full state to the unfilled state, the support and attachment part (28) is moved in the direction (M) of force of the locking part (12).

8. Device (1) according to claims 4 to 7 in which the load part (13) comprises a self-supporting and deformable part (29) in the form of two arms (29a) inclined on one another, on one hand, converging towards the part for support and attachment (26), and on the other hand, diverging towards the part for support and attachment (28), a double support and attachment part of the locking part (12) being also present.

9. Device (1) according to claims 4 to 8, in which the part for support and attachment (26) is supported by a support appendix (27) projecting from the surface (17) of the damping body (6), in particular, produced therewith.

10. Device (1) according to claims 2 to 9, in which the lateral surface (18) of the locking piece (12) has at least one area of clearance (19) which, in the inactive position of the locking piece (12), is situated in the load direction (F) of the device (1) by being spaced apart and without contact of at least one corresponding facing area of clearance (19a) belonging to or attached to the interior lateral surface (8) of the damping chamber (7) so as to ensure the discontinuity of the transmission of force in the load direction (F) of the device (1).

11. Device (1) according to claim 10, in which a facing clearance area (19a) belonging to or attached to the interior lateral surface (8) of the damping chamber (7) is an area of the lateral surface of a reinforcement (2, 3) or the damping body (6) turned towards the damping chamber (7) or an area of an engagement stop (24) arranged in the damping chamber (7).

12. Device (1) according to claims 2 to 11, in which the lateral surface (18) of the locking piece (12) has at least one area of engagement (20) which, in the active position of the locking piece (12), is situated in the load direction (F) of the device (1) by being in contact with transmission of force with at least one area of contiguous engagement (20a) belonging to or attached to the interior lateral surface (8) of the damping chamber (7), so as to ensure the continuity of the transmission of force in the load direction (F) of the device (1).

13. Device (1) according to claim 12, in which an area of contiguous engagement (20a) belonging to or attached to the interior lateral surface (8) of the damping chamber (7) is an area of the lateral surface of a reinforcement (2, 3) or of the damping mass (6) turned towards the damping chamber (7) or an area of an engagement stop (24) formed in the damping chamber (7).

14. Device (1) according to one of claims 2 to 13, in which the lateral surface (18) of the locking part (12) has an corresponding area of holding/force belonging to the load part (13), so as to ensure on one hand the maintaining of the locking part (12) in the active position or in the inactive position according to whether the force piece (13) is in the compressed state or in the deployed state, and on the other hand, the movement of the locking part (12), in the direction (M) of force of the locking part (12), from an inactive position to the active position during the changing of the load part (13) from the compressed state to the deployed state.

15. Device (1) according to claim 14, in which the lateral surface (18) of the locking part (12) has, in the holding/load area, a support and attachment part (30) complementary to the support and attachment part (28).

16. Device (1) according to claim 15, in which the lateral surface (18) of the locking part (12) includes a part formed with a recess (23) in the general form of an inverted double L, with, on one side, a clearance area (19) and on the other side an engagement area (20).

17. Device (1) according to one of claims 1 to 16, which may be a hydroelastic joint (1) having a main axis (XX) and lying between two transverse end faces (25), the internal reinforcement (2) emerging from at least one of the end faces (25) for its assembly, in which the internal reinforcement (2) is generally cylindrical, the external reinforcement (3) is generally tubular cylindrical, whose inner diameter is larger than the outer diameter of the inner reinforcement (2), so that the outer reinforcement (3) laterally and concentrically surrounds the inner reinforcement (2), the in-between (4) is generally annular cylindrical in shape extending radially and axially between the two reinforcements (2, 3) spaced radially from each other, the damping body (8) extends radially and axially and is fixedly and rigidly associated inwardly with the inner reinforcement (2) and outwardly with the outer reinforcement (3), two damping chambers (7) are provided by the design of the damping body (6), extending radially and axially, being diametrically opposed in the load direction F of the device (1), and interposed between the damping body (6) and the external reinforcement (3), an elongated and narrow damping, connecting channel communicates between the two damping chambers (7), in the filled state, the hydraulic damping liquid (10) fills under pressure the damping space formed by the two damping chambers (7) and the damping channel, and the load direction (F) of the device (1) is radial.

18. Device (1) according to claim 17 in which each damping chamber (7) is delimited by an interior lateral surface (8) of the damping chamber (7) formed on one side by a part of the damping chamber (7) of the interior surface (3a) of the external reinforcement (3) and on the other side by a surface of the damping chamber (7) by the damping mass (6).

19. Device (1) according to claim 18, in which each locking piece (12) has a lateral surface (18) in which the contour is of a pseudo-rectangular shape or is enclosed by an envelope of a pseudo-rectangular shape, with a first part of the surface (18a) being adjacent to an area of the surface of the damping chamber (7) of the damping mass (6), a second part of the surface (18b), opposing the first part of the surface (18a) situated towards the part of the damping chamber (7) of the interior surface (3a) of the external armature (3), and a third and fourth part of the surface (18c, 18d) opposing one another, connecting the first and second surface parts (18a, 18b).

20. Device (1) according to claim 19, wherein the second face part (18b) of the side surface (18) of each locking part (12) has a portion shaped with a recess (23) generally in the form of an inverted double L, and wherein the clearance area (19) of the side surface (18) is located in a median position on the second face part (18b) of the side surface (18).

21. Device (1) according to claims 19 to 20, which comprises, for each locking piece (12), a clearance area (19a) belonging to an engagement stop (24) arranged in the damping chamber (7), and possibly two facing engagement areas (19a) which, respectively, are formed by one part of the surface of the damping chamber (7) of the damping body (6) and belong to the engagement stop (24).

22. Palliative means for the loss of filling (11) of a device according to one of claims 1 to 21, especially suitable and intended to be integrated, in addition, into such a device (1), these means (11) being specific and proprietary and comprising a locking system including a fully rigid locking part (12) and a deformable load part (13) controlled by the state of the device with respect to filling.

23. Method for compensating for the loss of filling of a hydroelastic device (1) by using palliative means for the loss of filling (11) according to claim 22.
